# EUROPÄISCHE PATENTSCHRIFT

(11) **EP 4 039 560 B1**
(45) Veröffentlichungstag und Bekanntmachung des Hinweises auf die Patenterteilung: **17.04.2024**
(21) Anmeldenummer: 21154917.5
(22) Anmeldetag: 03.02.2021
(51) Int. Cl.: B62B 3/06, B62B 5/00, B62K 27/00, B62B 1/00, B62B 1/12, B62B 3/00, B62B 3/02, B62B 5/04

(54) **PALETTENTRAGANHÄNGER**
PALLET TRAILER
REMORQUE PORTE-PALETTE

(43) Veröffentlichungstag der Anmeldung: 10.08.2022
(73) Patentinhaber: e2trail GmbH, 86938 Schondorf am Ammersee (DE)
(72) Erfinder: EMMERT, Holger, 86938 Schondorf am Ammersee (DE); OSTERMEIER, Peter, 86938 Schondorf am Ammersee (DE)
(74) Vertreter: Appelt, Christian W.

(56) Entgegenhaltungen:
- WO-A1-2020/206163
- DE-C- 209 303
- DE-U1-202018 101 228
- US-A1- 2013 300 072
- US-A1- 2017 240 194
- US-B1- 9 505 595

## Beschreibung

Die Erfindung betrifft einen Palettentraganhänger für ein einspuriges Fahrzeug, wie ein Fahrrad. Insbesondere kann der Palettentraganhänger dazu ausgelegt und eingerichtet sein, von einem ein- oder mehrspurigen Fahrrad, beispielsweise einem dreirädrigen Lastenfahrrad, gezogen zu werden. Das Fahrrad kann beispielsweise ein E-Bike oder ein Pedelec sein.

Zum Transport von Gütern ist die Verwendung von Europaletten allgemein gebräuchlich. Eine Europalette hat im Allgemeinen längliche Kufen und wenigstens eine die Kufen verbindende Tragplatte. Die Europalette kann als Europoolpalette bezeichnet sein. Europaletten sind genormt nach DIN EN 13698-1 (2009-10). Eine Europalette hat im Allgemeinen eine Breite von 800 mm, eine Länge von 1200 mm und eine Höhe von 144 mm. Die Europalette kann man ihren sich in Längsrichtung erstreckenden Außenseiten Kufen sowie eine weitere Kufe mittig zwischen den beiden außenseitigen Kufen aufweisen. Die außenseitigen Kufen können etwa 100 mm breit sein. Die mittige Kufe kann etwa 145 mm breit sein. Zwischen der mittigen Kufe oder Mittelkufe und den jeweils benachbarten Außenkufen kann ein Abstand von etwa 227,5 mm vorgesehen sein. Die Tragplatte kann sich beispielsweise zusammensetzen aus drei Querbrettern, die die Kufen miteinander verbinden, und fünf längs verlaufenden Brettern an der Oberseite der Tragplatte. Die Tragplatte kann etwa 100 mm über der Unterseite der Europalette angeordnet sein.

Zum Transport von Transportpaletten über kurze Strecken können Palettenhubwagen eingesetzt werden. Der Einsatz von Palettenhubwagen ist jedoch im Allgemeinen beschränkt auf plane Flächen, wie Hallenböden. Um Güter über größere Strecken zu transportieren, werden die Transportpaletten häufig mit Lastkraftwagen transportiert. Zur Vermeidung von umweltschädlichen Emissionen und zur Entlastung der Verkehrswege beispielsweise in Städten besteht der Wunsch nach geeigneten alternativen Transportmitteln. Insbesondere besteht der Wunsch nach einem leichten und kostengünstigen Schwerlastanhänger zum Tragen von Europaletten für ein ein- oder mehrspuriges Fahrrad, der einfach bedienbar ist.

Ein Palettenhubanhänger für ein Fahrrad ist beispielsweise aus DE 20 2018 101 228 U1 bekannt. Der Palettenhubanhänger hat einen Rahmen mit einer daran angeordneten Laufradachse für zwei Laufräder und einem lenkbaren Stützrad. Das Stützrad ist über eine Hebevorrichtung mit dem Rahmen verbunden. Zum Aufnehmen einer Palette muss zunächst die Hebevorrichtung abgesenkt werden. Anschließend muss mit einem Hebegerät an der Rückseite des Palettenhubanhängers der Rahmen rückseitig abgestützt und der Palettenhubanhänger angehoben werden, um sodann die Laufräder zu demontieren. Nach der Demontage der Laufräder wird das Hebegerät von dem Rahmen entfernt. Zwei Zinken des Rahmens können dann unter eine aufzunehmende EUR-Palette gefahren werden. Um den Palettenhubanhänger in einen Transportzustand zurückzuführen, müssen die vorgenannten Schritte in umgekehrter Reihenfolge wiederholt werden. Der beschriebene Palettenhubanhänger erfordert eine Vielzahl verschiedener Arbeitsschritte zum Be- und Entladen. Die schwere und breite Konstruktion bedingt eine schlechte Manövrierbarkeit des Palettenhubanhängers. Der Palettenhubanhänger ist sehr unhandlich und speziell im innenstädtischen Bereich nur eingeschränkt einsetzbar.

US 2017/0240194 A1 betrifft einen modularen Palettenlift oder Palettenhubwagen zum Bewegen mit Gütern beladener Paletten in einem Lager, Geschäft sowie in oder aus Lastkraftwägen. Ein Lift für eine Gabelzinkenanordnung umfasst einen aufrechten Rahmen mit einem rückwärtigen Handgriffabschnitt, der am Rahmen befestigt ist. Ein Liftmechanismus ist am Rahmen gesichert. Der Liftmechanismus kann mit wenigstens einem Gabelzinken verbunden werden und diesen anheben. Mehrere Räder stützen den Rahmen. Der wenigstens eine Gabelzinken kann Teil einer austauschbaren Einheit sein, die vom Lift entfernbar ist.

US 2013/0300072 A1 betrifft eine unwandelbare Anhängeranordnung die geschoben oder gezogen werden kann. Die Anhängeranordnung kann als Nachrüstanordnung für einen Kinderwagen bereitgestellt werden und eine zum Schleppen ausgelegte Kupplungsanordnung umfassen.

US 9,505,595 B1 betrifft ein Palettenliftsystem mit einem Palettenheber und einer Karre mit angepassten Zinken zum Transportieren einer Palette bei verringertem Risiko der Beschädigung oder Verunzierung der Bodenfläche, auf welcher die Palette bewegt wird. Der Palettenheber und die Karre haben weiche Räder zum Überfahren von Türschwellen und andere Bodenflächen zur Verringerung des Beschädigungsrisikos und um den Transport von Paletten über unebene Bodenflächen, wie einen Parkplatz, oder durch schmale Eingänge, wie eine konventionelle Türe, zu vereinfachen.

DE 209 303 C betrifft eine durch Zurückschieben einer Wagendeichsel beim Zurückhalten von Pferden selbsttätig wirkende Wagenbremse.

WO 2020/206163 A1 beschreibt ein mehrstufiges Liefersystem und verschiedene damit assoziierte Vorrichtungen. Das mehrstufige Liefersystem enthält mehrere integrierte, modulare und austauschbare kompakte Elemente, die entweder für sich genommen oder in Kombination miteinander betrieben werden, um den Einsatz eines Liefersystems zu erreichen, welches bei Gesamtbetrachtung eine reduzierten Flächenbedarf im Vergleich zu konventionellen Liefersystem aufweist. Zum Bilden eines Liefersystems können als Vorrichtungen beispielsweise ein kompakttierbarer Containerwagen, ein kompakterer Containerschlepper oder Hänger und eine Antriebsvorrichtung vorgesehen sein.

Es ist eine Aufgabe der Erfindung, die Nachteile des Stands der Technik zu überwinden, insbesondere einen Palettenhubanhänger bereitzustellen, der einfacher zu handhaben, insbesondere besser manövrierbar ist. Diese Aufgabe wird gelöst durch den Gegenstand von Anspruch 1. Bevorzugte Weiterbildungen sind in den abhängigen Ansprüchen angegeben.

Demnach ist ein Palettentraganhänger für ein einspuriges Fahrzeug, wie ein Fahrrad, zum Transportieren einer Europalette mit länglichen Kufen und wenigstens einer die Kufen verbindenden Tragplatte vorgesehen. Der Palettentraganhänger umfasst zwei Hinterräder, wenigstens ein Vorderrad und ein von dem Vorderrad und den Hinterrädern getragenes Fahrgestell. Die zwei Hinterräder können um eine am Fahrgestell ortsfeste Achse drehbar sein. Das Vorderrad kann um eine Achse drehbar sein, die an einem Lenker befestigt ist, der schwenkbar am Fahrgestell gehalten ist. Der Palettentraganhänger kann mehrere Vorderräder aufweisen. Das Fahrgestell weist zwei Längsstreben auf, die zum Tragen der Europalette unter der Tragplatte und zwischen den Kufen anordenbar sind. Die Längsstreben können insbesondere derart bemessen sein, dass sie nicht breiter sind, vorzugsweise schmäler sind, als der Abstand zwischen einer Außenkufe und einer Mittelkufe einer Europalette. Vorzugsweise ist zwischen den Längsstreben eine lichte Weite gebildet, die wenigstens der Breite einer Mittelkufe einer Europalette entspricht. Vorzugsweise entspricht die Länge der Längsstreben wenigstens der Hälfte der Länge, insbesondere wenigstens dreiviertel, vorzugweise mehr als der gesamten Länge, einer Europalette. Vorzugsweise ist die Oberseite der beiden Längsstreben in derselben Ebene angeordnet. Die Oberseite der Längsstreben ist während des Fahrbetriebs vorzugsweise nicht höher angeordnet als die Höhe der Vorder- und/oder Hinterräder des Palettentraganhängers. Insbesondere ist die Oberseite der Längsstreben nicht höher angeordnet als die Höhe des Vorderrads. Alternativ oder zusätzlich ist die Oberseite der Längsstreben nicht höher angeordnet ist die Höhe der Hinterräder. Vorzugsweise kann die Oberseite der Längsstreben zumindest auf Höhe, insbesondere oberhalb, der Drehachse der Hinterräder angeordnet sein. Insbesondere ist die Oberseite der Längsstrebe in etwa auf Höhe der Drehachse des wenigstens einen Vorderrad angeordnet. Besonders bevorzugt befindet sich die Oberseite der Längsstreben im Bereich ±5 cm, vorzugweise ±2 cm, ausgehend von der Drehachse des wenigstens einen Vorderrads. Indem die Oberseite der Längsstreben zum Tragen der Europalette in etwa auf Höhe der Drehachse des Vorder- und/oder Hinterrads angeordnet ist, kann während des Fahrbetriebs des Palettentraganhängers sichergestellt werden, dass dessen Schwerpunkt niedrig ist, sodass schwere Lasten mit dem Palettentraganhänger sehr stabil auch bei großen Geschwindigkeiten transportiert werden können.

Der Palettentraganhänger kann wenigstens einen elektrischen Antrieb aufweisen sowie gegebenenfalls wenigstens einen Akku zum Bereitstellen elektrischer Energie für den elektrischen Antrieb. Der wenigstens eine elektrische Antrieb kann ein Hinterrad oder beide Hinterräder antreiben. Alternativ oder zusätzlich kann der wenigstens eine elektrische Antrieb das Vorderrad antreiben.

Gemäß der Erfindung umfasst das Fahrgestell einen ersten Gestellabschnitt, an den das wenigstens eine Vorderrad gelagert ist, und einen zweiten Gestellabschnitt, an dem die Hinterräder gelagert sind. Insbesondere besteht das Fahrgestell aus dem ersten und dem zweiten Gestellabschnitt. Der erste und der zweite Gestellabschnitt sind von einander insbesondere werkzeugfrei lösbar.

Gemäß der Erfindung definieren die Hinterräder eine Spurbreite. Die Spurbreite ist nicht größer als die Breite der Europalette. Vorzugsweise ist die Spurbreite der Hinterräder kleiner als die Breite der Europalette. Insbesondere entspricht die Spurbreite der Hinterräder wenigstens der Hälfte, vorzugsweise wenigstens dreiviertel der Breite Europalette. Die Spurbreite kann bestimmt werden anhand des Abstands zwischen den gegenüberliegenden, von einander weg weisenden Außenseiten der Hinterräder. Bei einem Palettentraganhänger mit mehreren Vorderrädern weisen auch die Vorderräder eine (Vorderrad-) Spurbreite auf. Insbesondere ist die Vorderrad-Spurbreite nicht größer als, insbesondere kleiner als, die Breite der Europalette. Vorzugsweise ist die Vorderrad-Spurbreite kleiner oder gleich der Spurbreite der Hinterräder. Indem für die Hinterräder eine Spurbreite definiert ist, die nicht größer ist als die Breite der Europalette, kann gewährleistet sein, dass die Breite des Palettentraganhänger nicht größer ist als die Breite des darauf transportierten Transportgutes. Die Ausführung des Palettentraganhängers mit einer solchen Breite verbessert die Handhabbarkeit des Anhängers. Insbesondere für den innerstädtischen Verkehr kann dank einer schmalen Spurbreite gewährleistet werden, dass der Palettentraganhänger auch in schmalen Gassen oder auf schmalen Fahrradwegen gut einsetzbar ist. Indem die Spurbreite auf die Breite der Palette limitiert wird, wird auch die Kurvengängigkeit des Palettenhubanhängers verbessert.

Gemäß einer Ausführungsform der Erfindung weisen die Hinterräder wenigstens eine Bremse auf. Vorzugsweise weist wenigstens eines der Hinterräder, insbesondere weisen wenigstens beide Hinterräder eine Bremse auf. Die Hinterradbremse oder Hinterradbremsen sind vorzugsweise als elektrische, hydraulische oder mechanische Bremse, beispielsweise als Felgenbremse, Trommelbremse oder als Scheibenbremse realisiert. Alternativ kann eine Hinterradbremse als elektrisch betriebene Hinterradbremse realisiert sein. Die Hinterradbremse kann eine Betriebs- und/oder Feststellbremse sein. Speziell im Hinblick auf den Transport von Gütern mittels Europaletten, die bereits für sich genommen ein Eigengewicht von 20 kg aufweisen, hat es sich als vorteilhaft erwiesen, die Hinterräder des Palettentraganhängers mit einer Bremse auszustatten. Die Bremse an den Hinterrädern des Palettentraganhängers verbessern den Komfort und die Sicherheit beim Betreiben des Palettentraganhängers mit einem Fahrrad erheblich. Insbesondere bei einer Ausführung mit einer rechten Hinterradbremse und einer linken Hinterradbremse oder einer gemeinsamen Bremse für rechtes und linkes Hinterrad wird die Handhabbarkeit des Palettentraganhängers gegenüber konventionellen Palettentraganhängern deutlich verbessert. Alternativ oder zusätzlich kann das Vorderrad eine elektrische, mechanische oder hydraulische Bremse aufweisen, die dazu eingerichtet ist, synchron mit der wenigstens einen Hinterradbremse zu wirken.

Bei dem Palettentraganhänger umfasst das Fahrgestell einen ersten Gestellabschnitt, an dem das wenigstens eine Vorderrad gelagert ist, und einen zweiten Gestellabschnitt, an dem die Hinterräder gelagert sind. Es kann bevorzugt sein, dass das Fahrgestell aus dem ersten Gestellabschnitt und dem zweiten Gestellabschnitt besteht. Der erste Gestellabschnitt kann eine Deichsel und/oder einen Lenker zum Tragen des wenigstens einen Vorderrads umfassen. Der erste Gestellabschnitt und der zweite Gestellabschnitt sind voneinander lösbar. Insbesondere sind der erste und der zweite Gestellabschnitt werkzeugfrei voneinander lösbar. Insbesondere ist der erste Gestellabschnitt von dem zweiten Gestellabschnitt lösbar, ohne dass die Hinterräder von dem zweiten Gestellabschnitt entfernt werden müssen und ohne dass das wenigstens eine Vorderrad von dem ersten Gestellabschnitt gelöst werden muss. Der erste oder der zweite Gestellabschnitt tragen die wenigstens zwei Längsstreben. Mittels der Lösbarkeit des ersten Gestellabschnitts vom zweiten Gestellabschnitt kann der Palettentraganhänger dazu befähigt werden, dergestalt handhabbar zu sein, dass die an dem ersten oder zweiten Gestellabschnitt befestigten Längsstreben die zu transportierende Europalette längs unterfahren können, ohne dass der gegenüberliegende zweite oder erste Gestellabschnitt mit dem daran befestigten Hinterrädern bzw. Vorderrad ein Hindernis beim Aufnehmen der Europalette darstellt. Auf diese Weise kann auch darauf verzichtet werden, dass eine Hubvorrichtung, wie ein Gabelstapler, erforderlich ist, um eine mit Gütern beladene Transportpalette auf dem Palettentraganhänger abzusetzen.

Gemäß einer bevorzugten Ausführung eines Traganhängers, mit voneinander lösbaren ersten und zweitem Gestellabschnitt und an den Hinterrädern angeordneter Bremse ist vorgesehen, dass das Fahrgestell eine, insbesondere werkzeugfrei, lösbare Bremskupplung aufweist, die dazu ausgelegt und eingerichtet ist, um eine Bremskraftwirkung von dem ersten Gestellabschnitt auf den zweiten Gestellabschnitt zu übertragen. Vorzugsweise ist die Bremskupplung derart ausgestaltet, dass die Bremskupplung gelöst ist, wenn der erste Gestellabschnitt von dem zweiten Gestellabschnitt getrennt ist, und dass die Bremskupplung gekoppelt ist, wenn der erste Gestellabschnitt mit dem zweiten Gestellabschnitt verbunden ist, um das Fahrgestell zu bilden. Die Bremskupplung und die Gestellabschnitte sind vorzugweise derart auf einander abgestimmt, dass eine, insbesondere lineare und/oder rotatorische, Relativbewegung des vorderen und des hinteren Gestellabschnitts zueinander ein Schließen oder Lösen der Bremskupplung bewirkt. Die Bremskupplung kann eine vorzugsweise kraftschlüssige und/oder formschlüssige Verbindung zur Übertragung von Bremskraft sein. Vorzugsweise sind die Bremskupplung und das Fahrgestell derart aufeinander abgestimmt, dass das Ankoppeln und/oder Entkoppeln sowohl der Gestellabschnitte als auch der Bremskupplung in einem einzigen Arbeitsschritt (einmaliges Senken bzw. Heben, insbesondere ohne Pumpen) realisierbar ist. Auf diese Weise kann eine reibungsarme und spielfreie mechanische Übertragung der Bremswirkung auf die Hinterräder realisiert sein.

Gemäß einer Weiterbildung umfasst die Bremskupplung einen am ersten Gestellabschnitt befestigten ersten Wipphebel und einen am zweiten Gestellabschnitt befestigten zweiten Wipphebel. Der erste Wipphebel und der zweite Wipphebel sind derart aufeinander abgestimmt, dass der erste Wipphebel und der zweite Wipphebel durch eine translatorische Relativbewegung des zweiten Gestellabschnitts relativ zum ersten Gestellabschnitt, insbesondere in Längsrichtung, in einen, insbesondere formkomplementären, Kontakteingriff zur Übertragung einer Bremskraftwirkung bringbar sind. Es kann bevorzugt sein, dass eine Bewegung des zweiten Gestellabschnitts in Längsrichtung auf den ersten Gestellabschnitt zu ein kämmendes Ineinandergreifen des ersten Wipphebels und des zweiten Wipphebels bewirken kann. Vorzugsweise ist der erste Wipphebel um eine erste Schwenkachse beweglich an dem ersten Gestellabschnitt befestigt. Vorzugsweise ist der zweite Wipphebel um eine zweite Schwenkachse beweglich an dem zweiten Gestellabschnitt befestigt. Der Wipphebel kann relativ zum Gestellabschnitt beweglich sein zwischen wenigstens einer Bremsstellung, in welcher der die wenigstens eine Bremse der Hinterräder mit Bremskraft beaufschlagt wird, und einer Freigabestellung, in der ein Freilauf der Hinterräder gestattet ist. Es ist klar, dass die Bremse der Hinterräder und der erste und/oder zweite Wipphebel mehrere verschiedene, insbesondere stufenlos verstellbare, Bremsstellungen einnehmen können, um unterschiedlich starke Bremskraftwirkungen bereitzustellen.

Bei einer Weiterbildung der Erfindung ist vorgesehen, dass die Bremsen ein zweites Bremskraftübertragungsmittel, wie einen zweiten Bowdenzug oder eine Bremshydraulikleitung, umfasst und der zweite Wipphebel zum Betätigen der Bremse mit dem zweiten Bowdenzug verbunden ist. Insbesondere umfasst der zweite Wipphebel ein Ausgleichsmittel, wie ein Hydraulikkolben für zwei Bremshydraulikteilleitungen oder eine an einer Schlaufe des zweiten Bowdenzugs geführten Losrolle, der bzw. das dazu ausgelegt und eingerichtet ist, eine Bremse an dem rechten Hinterrad und eine Bremse an dem linken Hinterrad gleichmäßig mit Bremskraft zu beaufschlagen. Durch die gleichmäßige beaufschlagen der Bremsen am rechten und linken Hinterrad wird das Handling des Palettentraganhängers verbessert. Ein Hydraulikkolben kann über mehrere, beispielsweise zwei, Teilleitungen mit entsprechend vielen verschiedenen Hydraulikbremsen, beispielsweise je einer am rechten und am linken Hinterrad, verbunden sein, um hydraulischen Druck den mehreren Hydraulikbremsen bereitzustellen.

Bei einer anderen Ausführung eines Palettentraganhängers, die mit den vorigen kombinierbar ist, umfasst der erste Gestellabschnitt ein erstes Bremskraftübertragungsmittel, wie einen ersten Bowdenzug oder eine erste Bremshydraulikleitung, zur Übertragung von Bremskraft an die Bremse. Der erste Bowdenzug ist zumindest abschnittsweise innerhalb einer der Längsstreben angeordnet. Durch die Anordnung des ersten Bowdenzugs im Inneren der Längsstrebe wird sichergestellt, dass die Beladung des Palettentraganhänger die Übertragung der Bremskraftwirkung auf die Hinterräder nicht beeinträchtigt. Die Längsstrebe schützt den ersten Bowdenzug vor der Einwirkung äußerer Einflüsse.

Bei einer Ausführung eines Palettentraganhängers, umfasst der erste Gestellabschnitt einen Auflaufbremsaktor, der dazu ausgelegt und eingerichtet ist, der wenigstens einen Bremse eine Bremskraft bereitzustellen, wenn sich die Geschwindigkeit des Fahrzeugs, insbesondere des Fahrrads, vorzugsweise des Pedelecs oder E-Bikes, reduziert, welches den Palettentraganhänger zieht. Der Auflaufbremsaktor kann an der Deichsel des Palettentraganhängers angeordnet sein. Der Auflaufbremsaktor kann Betriebsgemäß mit einer Vorderradbremse am wenigstens einen Vorderrad verbunden sein. Alternativ oder zusätzlich kann der Auflaufbremsaktor mit wenigstens einer Hinterradbremse dem wenigstens einen Hinterrad verbunden sein. Die Verbindung des Auflaufbremsaktor mit der wenigstens einen Bremse kann eine mechanisches Bremskraftübertragungsmittel, wie einen Bowdenzug, eine hydraulisches Bremskraftübertragungsmittel, wie eine Bremshydraulikleitung, und/oder ein elektrisches, insbesondere kabelloses oder kabelgebundenes, Bremskraftübertragungsmittel umfassen oder daraus bestehen.

Der Palettentraganhänger kann wenigstens eine Vorderradbremse umfassen. Die Vorderradbremse ist vorzugsweise als mechanische Bremse, beispielsweise als Felgenbremse oder als Scheibenbremse realisiert. Alternativ kann eine Vorderradbremse elektrisch betrieben sein. Die Vorderradbremse kann eine Betriebs- und/oder Feststellbremse sein. Mithilfe einer Auflaufbremse kann auf besonders einfache Weise sichergestellt werden, dass beim Abbremsen des Fahrrads oder anderen Zugfahrzeugs auch der Palettentraganhänger gebremst wird. Indem der Palettentraganhänger selbst gebremst wird, wobei das Abbremsen des Palettentraganhängers durch den Auflaufbremsaktor veranlasst ist, kann gewährleistet werden, dass unabhängig von dem Gewicht des Anhängers und dessen eventueller Ladung ein sicheres Abbremsen bewirkt werden kann. Dadurch verbessert sich die Handhabbarkeit und Manövrierbarkeit des Palettentraganhänger, unter anderem bei der innerstädtischen Verwendung.

Gemäß einer Weiterbildung umfasst der Auflaufbremsaktor wenigstens einen zwischen dem Fahrgestell und der Deichsel zum Anbinden des Fahrgestells an das Fahrzeug angeordneten Hebel, wobei der Hebel schwenkbar an dem Fahrgestell gelagert ist und dazu ausgelegt und eingerichtet ist, eine auf das Fahrgestell zu gerichtete Bewegung der Deichsel in eine Bremskraft umzuwandeln. Vorzugsweise kann der Hebel des Auflaufbremsaktors an einem Lenker des Fahrgestells befestigt sein, welcher das Vorderrad trägt. Der Hebel kann beispielsweise U-förmig oder bügelförmig sein, und das Vorderrad umgreifen, insbesondere im Wesentlichen parallel zu einer Gabel des Lenkers. Vorzugsweise ist die Schwenkachse des Hebels nahe und/oder parallel zu der Drehachse des Vorderrads an dem Lenker angeordnet. Insbesondere können sowohl das Vorderrad als auch die Deichsel in Fahrtrichtung derart mit dem Lenker verbunden sein, dass die Fahrtrichtung dem Vorderrad mittels der Deichsel aufgeprägt wird. Vorzugsweise ist der Auflaufbremsaktor dazu eingerichtet, mithilfe des Hebels mechanisch eine Bremswirkung bereitzustellen, beispielsweise mithilfe wenigstens eines (ersten) Bowdenzugs. Beispielsweise kann an einem ersten Ende des Hebels des Auflaufbremsaktor an die Deichsel angelenkt sein und an einem gegenüberliegenden zweiten Ende des Hebels ein (erster) Bowdenzug, sodass der Bowdenzug eine Zugkraft zum Übermitteln einer Bremswirkung erfährt, wenn das erste Ende des Hebels beim Abbremsen eines Zugfahrzeugs, insbesondere des Fahrrads, in Richtung des Fahrgestells gedrängt wird.

Zusätzlich oder alternativ kann an dem zweiten Ende des Hebels eine Vorderradbremse angebunden sein. Es sei klar, dass im Rahmen der Erfindung anstelle eines Bowdenzugs ein beliebiges anderes Bremskraftübertragungsmittel, wie etwa eine Bremshydraulikleitung, einsetzbar ist.

Der Auflaufbremsaktor kann eine Arretierung zum Festhalten des insbesondere bügelförmigen Hebels, insbesondere in einer Los-Stellung, aufweisen. In der Los-Stellung wird durch den Auflaufbremsaktor keine Bremswirkung für die wenigstens eine Bremse des Palettentraganhängers bereitgestellt. Mithilfe der Arretierung kann verhindert werden, dass die wenigstens eine Bremse des Palettentraganhängers betätigt wird. Eine Arretierung kann beispielsweise vorgesehen sein, um den ersten Gestellabschnitt frei beweglich zu halten, beispielsweise um einen ersten Gestellabschnitt mit zwei daran befestigten Längsstreben unter eine Europalette zu schieben, wobei der zweite Gestellabschnitt an einem Handgriff gegriffen werden kann. Dies macht den Palettentraganhängers beispielsweise nach dem Ablösen vom Fahrrad oder anderen Zugfahrzeug einfacher zu handhaben.

Gemäß einer Ausführung eines Palettentraganhängers weist der zweite Gestellabschnitt wenigstens einen oberhalb der Hinterräder angeordneten Handgriff, insbesondere zwei Handgriffe, und wenigstens einen im Bereich der Hinterräder angeordnetes, quer zu den Hinterrädern ausgerichtetes oder ausrichtbares, insbesondere klappbares, Tragblech auf. Das Tragblech kann eine hochgeklappte Konfiguration aufweisen, in der es als rückwärtige Anschlagsfläche oder Bordwand für eine auf dem Palettentraganhängers transportierte Europalette dient. Insbesondere in einem Zustand, in dem der zweite Gestellabschnitt von dem ersten Gestellabschnitt gelöst ist, kann das Tragblech in eine heruntergeklappte Konfiguration verbracht werden, in der das Tragblech als Tragfläche einsetzbar ist. Ein zweiter Gestellabschnitt mit einem Tragblech, dass quer zu den Hinterrädern ausgerichtet, insbesondere herabgeklappt, ist, kann als Sackkarre eingesetzt werden. Ein Palettentraganhänger, dessen zweiter Gestellabschnitt als Sackkarre verwendbar ist, erlaubt dem Verwender eine besonders einfache Handhabung von Transportgütern beispielsweise beim An- und Abtransport der Transportgüter von bzw. zu dem Palettentraganhänger. So können beispielsweise mehrere schwere Transportgüter, wie Fässer, mithilfe des Palettentraganhängers innerstädtisch über größere Strecken transportiert werden, und mithilfe des Sackkarren-artigen zweiten Gestellabschnitts zwischen einem Lagerort innerhalb eines Hauses und dem Palettentraganhänger.

Gemäß einer Ausführung eines Palettentraganhängers umfasst der zweite Gestellabschnitt eine Hebelkupplung zum Anbinden an den ersten Gestellabschnitt. Die Hebelkupplung umfasst wenigstens ein, insbesondere zwei, nach oben offene Haken, die zum Erfassen und Anheben der Längsstreben ausgelegt und eingerichtet sind. Die Längsstrebe oder die Längsstreben können zum Erfassen mittels des Hakens einen zu dem Haken formkomplementären Bolzen, Dorn, Steg oder ähnliches aufweisen. Zusätzlich kann die Hebelkupplung einen gegenüber zu der Öffnung des Haken angeordneten Anschlag zum ortsfesten Positionieren der Längsstreben in Bezug auf den Haken aufweisen. Der Anschlag und der Haken können beispielsweise derart aufeinander abgestimmt sein, dass ihr Abstand in vertikaler Richtung in etwa der Höhe des Längsstegs entspricht. Der Anschlag verhindert vorzugsweise ein unbeabsichtigtes Lösen der Längsstrebe aus dem Haken, beispielsweise durch Anheben der Längsstrebe. Alternativ oder zusätzlich kann die Hebelkupplung wenigstens eine, insbesondere lösbare, Sicherung aufweisen, die dazu ausgelegt und eingerichtet ist, eine Trennung des ersten Gestellabschnitts vom zweiten Gestellabschnitt zu verhindern, insbesondere dann, wenn die Längsstrebe sowohl einerseits mit dem Haken als auch andererseits mit dem Anschlag in einem Kontakteingriff steht. Die Sicherung kann beispielsweise eine federgespannte Rastnase umfassen. Die federgespannte Rastnase kann vorzugsweise gegenüber dem Anschlag angeordnet sein. Der Abstand der Rastnase von dem Anschlag kann im Wesentlichen der Höhe einer Längsstrebe entsprechen. Der zweite Gestellabschnitt ist insbesondere mit einem Betätigungsteil, wie ein Griff, zum Lösen der Sicherung versehen. Mithilfe der Sicherung kann verhindert werden, dass die Längsstrebe sich beim Verwenden des Palettentraganhängers von dem Anschlag entfernt. Mithilfe einer solchen Hebelkupplung kann eine einfache Befestigung und Lösbarkeit des zweiten Gestellabschnitts an bzw. von dem ersten Gestellabschnitt realisiert werden.

Gemäß einer weiteren Ausführung, die mit den vorigen kombinierbar ist, sind die Längsstreben fest mit dem ersten Gestellabschnitt verbunden. Jede Längsstrebe weist wenigstens einen in Längsrichtung gegenüber dem Vorderrad angeordnete Hilfsrolle auf. Ein erster Gestellabschnitt, der mithilfe der Hilfsrollen und dem Vorderrad beweglich ist, kann als Palettenhubwagen verwendet werden. So kann auf einfache Weise der erste oder vordere Gestellabschnitt bewegt werden, um unter eine Europalette zu fahren. Beispielsweise kann das Vordergestell mithilfe der an den Längsstreben befestigten Hilfsrollen verwendet werden, um entsprechend einem Palettenhubwagen in einer Lagerhalle verwendet zu werden, beispielsweise um eine Palette von einem Lagerort zu dem Zugfahrzeug zu bringen.

Gemäß einer Weiterführung umfasst der erste Gestellabschnitt eine Hebevorrichtung, wie einer Kniehebelmechanik oder eine Kurbel, um die Längsstreben in eine abgesenkten Stellung zum Unterfahren der Europalette und/oder in eine angehobenen Stellung zum Tragen der Europalette zu verbringen. Alternativ oder zusätzlich kann die Hebevorrichtung zum einseitigen Anheben des ersten Gestellabschnitts eingerichtet sein. Die Hebevorrichtung ist dazu eingerichtet und ausgelegt, dass die Oberseite der Längsstreben in der abgesenkten Stellung vollständig unterhalb der Tragplatte einer auf dem Boden positionierten Europalette angeordnet sind. Insbesondere ist die Hebevorrichtung dazu eingerichtet, in der angehobenen Stellung die Längsstreben derart zu positionieren, dass eine auf den Längsstreben ruhende Europalette zumindest abschnittsweise vom Boden entfernt ist.

Bei einer Weiterführung des Palettentraganhängers ist am ersten Gestellabschnitt wenigstens ein schwenkbares Stützrad angeordnet, das zwischen einer niedrigen und einer hohen Stellung beweglich an dem ersten Gestellabschnitt gelagert ist. Vorzugsweise sind rechts und links am ersten Gestellabschnitt je ein Stützrad angeordnet. Insbesondere ist das wenigstens eine Stützrad in der abgesenkten Stellung der Hebevorrichtung in der hohen Stellung und in der angehobenen Stellung der Hebevorrichtung in der niedrigen Stellung angeordnet. Vorzugsweise sind die Hebevorrichtung und das wenigstens eine Stützrad derart aufeinander abgestimmt, dass bei einer Betätigung der Hebevorrichtung selbsttätig das wenigstens eine Stützrad seine Stellung wechselt. Es kann bevorzugt sein, dass eine Feder das wenigstens eine Stützrad in seine niedrige und/oder hohe Stellung drängt. Mithilfe des wenigstens einen Stützrades kann eine sichere Manövrierbarkeit des Palettentraganhängers auch unter schwerer Last bei Kurvenfahrten sicher gewährleistet werden. Indem das wenigstens eine Stützrad automatisch beim Absenken bzw. Anheben des Palettentraganhängers seine Stellung wechselt, ist die Handhabbarkeit des Palettentraganhängers vereinfacht.

Gemäß einer Ausführung weist der Palettentraganhänger wenigstens einen am zweiten Gestellabschnitt angeordneten Elektromotor auf, der dazu ausgelegt und eingerichtet ist, wenigstens eines der Hinterräder anzutreiben. Vorzugsweise treibt der wenigstens eine Elektromotor beide Hinterräder an. Vorzugsweise sind beide Hinterräder mit Radnabenmoter ausgeführt, die zum Antreiben und/oder Bremsen, insbesondere rekuperierenden Bremsen, ausgelegt und eingerichtet sind. Vorzugsweise weist der Elektromotor eine Antriebssteuerung auf, die im Fahrbetrieb des Palettentraganhängers, insbesondere durch den Auflaufbremsaktor und/oder einen PAS-Sensor, betätigbar ist, und/oder die eine Handsteuerung des Elektromotors bei einer Sackkarren-artigen Verwendung des zweiten Gestellabschnitts im von dem ersten Gestellabschnitt gelösten Zustand erlaubt.

Weitere Merkmale und Vorteile der Erfindung ergeben sich aus der nachgehenden Beschreibung, in der bevorzugte Ausführungsformen der Erfindung beispielhaft anhand von schematischen Zeichnungen erläutert sind. Dabei zeigen:
- Figur 1: eine perspektivische Ansicht einer ersten Ausführung eines Palettentraganhängers,
- Figur 2: eine Vorderansicht des Palettentraganhängers gemäß Figur 1.
- Figur 3: eine perspektivische Ansicht einer zweiten Ausführung eines Palettentraganhängers mit getrennten Gestellabschnitten;
- Figur 4a-4e: verschiedene Seitenansichten des Palettentraganhängers gemäß Fig. 3;
- Figur 5a und 5b: Detaildarstellungen einer Bremskupplung;
- Figur 6a-6c: verschiedene Darstellungen eines Sackkarren-artigen zweiten Gestellabschitts
- Figur 7a und 7b: Detaildarstellungen einer Hebelkupplung;
- Figur 8a und 8b: Detaildarstellungen eines Vorderrad-Lenkers;
- Figur 9: eine schematische Seitenansicht des Palettentraganhängers
- Figur 10: Detaildarstellung eines Auflaufbremsaktors; und
- Figur 11: eine Darstellung einer Europalette mit Umhausung.

In der nachfolgenden Beschreibung bevorzugter Ausführungen anhand der Figuren werden für dieselben oder ähnliche Komponenten verschiedener Ausführungsform dieselben oder ähnliche Bezugszeichen verwendet, um die Lesbarkeit zu vereinfachen.

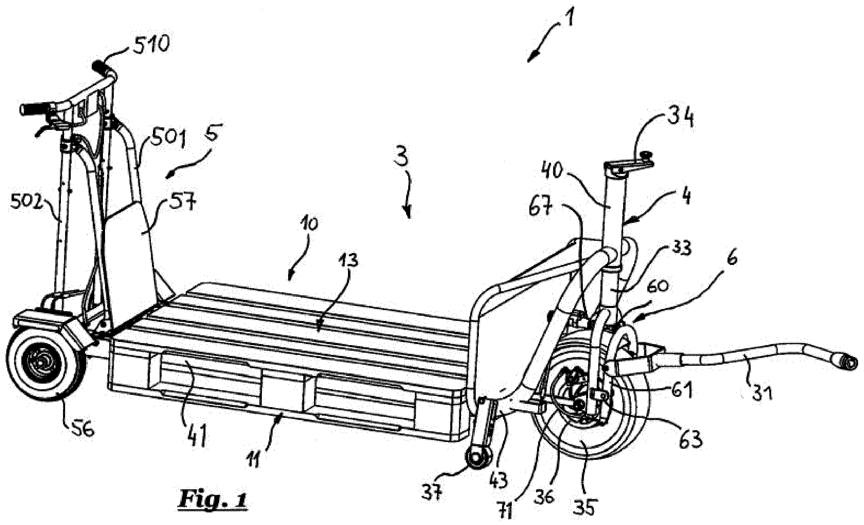

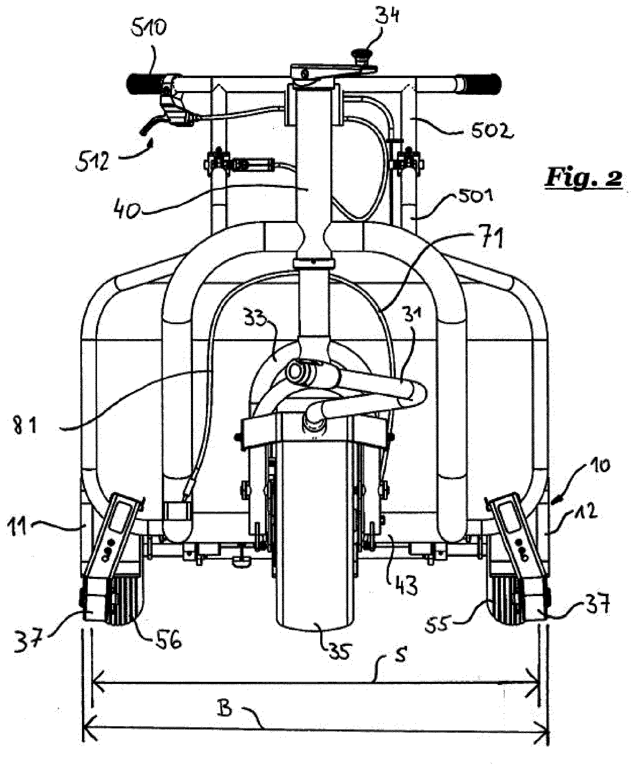

Figur 1 und Figur 2 zeigen einen als Palettenhubanhänger ausgestalteten Palettentraganhänger 1 für ein Fahrrad (nicht abgebildet). Der Palettentraganhänger 1 trägt eine Europalette 10. Die Europalette 10 umfasst eine rechte Kufe 11 eine linke Kufe 12 sowie eine von den Kufen 11, 12 getragene Tragplatte 13. die Europalette 10 hat eine Breite B.

Der Palettentraganhänger 1 hat ein Fahrgestell 3. Das Fahrgestell 3 setzt sich zusammen aus einem ersten Gestellabschnitt 4, an den das wenigstens eine Vorderrad 35 gelagert ist, und einem zweiten Gestellabschnitt 5, an dem die Hinterräder 55, 56 gelagert sind. Das Fahrgestell 3 umfasst zwei Längsstreben 41 oder Längsträger. Bei der hier gezeigten Ausführung sind die Längsträger 41 teil des ersten Gestellabschnitts 4. Die Längsträger 41 sind mit einem Querträger 43 verbunden. Auf den Längsträgern 41 kann eine Europalette 10 aufliegen.

Der Palettentraganhänger 1 umfasst ein Fahrgestell 3 mit einer schwenkbaren Gabel 33 mit daran drehbar gelagertem Vorderrad 35. Das Vorderrad 35 kann auch als Stützrad oder erstes Laufrad bezeichnet sein. An dem Fahrgestell 3 sind Hinterräder 55, 56 drehbar gelagert, die als zweite Laufräder bezeichnet sein können.

Eine Deichsel 31 ist mittels eines Auflaufbremsaktors 6 mit dem Fahrgestell 3 verbunden. Der Auflaufbremsaktor 6 umfasst einen bügelförmigen Hebel 61, der schwenkbar an der Gabel 33 gelagert ist. Der bügelförmige Hebel 61 ist nahezu parallel zu den Zinken der Gabel 33 ausgerichtet. Der Hebel 61 ist oben gelenkig mit der Deichsel 31 verbunden. Mit dem Hebel 61 können Zug- und Druckkräfte, die von dem Fahrrad oder anderen Zugfahrzeug in die Deichsel 31 eingebracht werden, in Wegsignale übersetzt werden. Die Hebel-Wegsignale können beispielsweise zur Bremssteuerung, insbesondere zur mechanischen oder elektronischen Bremssteuerung, und/oder als Steuersignal für wenigstens einen Antriebsmotor verwendet werden. Bei der in Figur 1 dargestellten Ausführung hat das Vorderrad 35 eine Vorderradbremse 36, die hier als Scheibenbremse ausgeführt ist. Der Hebel 61 ist mit einem Vorderradbowdenzug 71 zum Betätigen der Vorderradbremse 36 verbunden.

Wenn während einer Transportfahrt das Zugfahrzeug seine Geschwindigkeit reduziert, weil es beispielsweise bremst, drängt die Massenträgheit des Palettentraganhängers 1 selbigen dazu, auf das Zugfahrzeug auf zu laufen. Dabei treten Druckkräfte in der Deichsel 31 in der Fahrtrichtung auf. Die Druckkräfte in der Deichsel 31 drängen den oberen Teil des Hebels 61 auf das Fahrgestell 3 zu, sodass der Hebel 61 eine Schwenkbewegung um die Schwenkachse 63 vollführt. Dass untere Ende des Hebels 61 bewegt sich von der Lenkergabel 33 fort und zieht an dem Vorderradbowdenzug 71 und betätigt so die Vorderradbremse 36. Ein Auflaufen des Palettentraganhängers 1 das Zugfahrzeug wird so verhindert.

Umgekehrt treten bei einer Beschleunigung des Zugfahrzeugs Zugkräfte in der Deichsel 31 auf, die den oberen Teil des Hebels 61 vor Fahrgestell 3 fortziehen. Dadurch wird die Bremse 36 gelöst. Abhängig von der Beschleunigung des Fahrrads, dass die Palettentraganhänger 1 zieht, wird der Hebel weiter ausgelenkt. Die Auslenkung des Hebels 61 kann übersetzt werden in ein Motorsteuersignal zum Betätigen eines elektrischen Antriebs des Palettentraganhängers 1. Der Auflaufbremsaktor 6 kann insofern auch als Motorsteuerung wirken. Ein Signal zur Motorsteuerung kann von dem Auflaufbremsaktor 6 mechanisch, beispielsweise mittels eines Bowdenzugs, elektrisch, oder kabellos, beispielsweise per Funksignal, übertragen werden (nicht näher dargestellt).

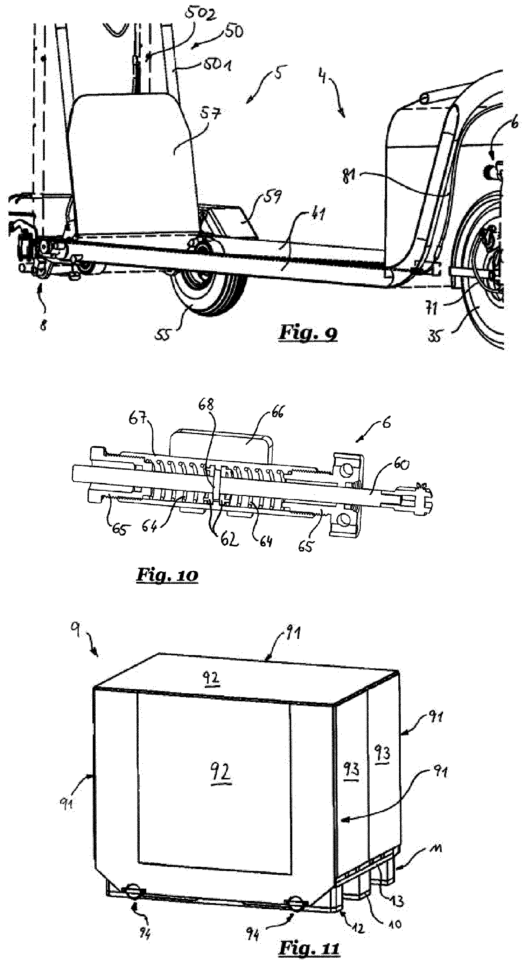

Figur 10 zeigt im Detail eine exemplarische Ausführung eines Auflaufbremsaktors 6. Der Auflaufbremsaktor 6 kann einen stangenartigen Mitnehmer 60 zum Empfangen einer Bewegung von dem Hebel 61 aufweisen. An dem Mitnehmer sind zwei einander gegenüberliegende Federteller 62 gehalten, von denen einer in eine Zugrichtung entsprechend der Fahrtrichtung und der andere in eine Druckrichtung entgegen der Fahrtrichtung von dem Mitnehmer 60 mitgenommen wird. Zu diesem Zweck kann ein Mitnehmerbolzen quer zum Mitnehmer 60 angebracht sein. An jedem Federteller 62 stützt sich eine Druckfeder 64 ab. Die Druckfeder ist zwischen einem jeweiligen Federteller 62 und einem jeweiligen Gegenlager 65 gehalten. Das Gegenlager 65 ist als eine Einstellschraube realisiert, mittels welcher die Vorspannkraft der Feder 64 einstellbar ist. Die Gegenlager 65 sind an einem rohrförmigen Gehäuse 67 befestigt, in dem der Mitnehmer 60, die Federtellern 63 und die Federn 64 aufgenommen sind. Vorzugweise mittig innerhalb des Gehäuses 67 ist wenigstens eine Anschlagkontur 68 vorgesehen, die eine Bewegung eines Federtellers 62 entgegen der Federkraft begrenzt. Mithilfe der Anschlagkontur lässt sich eine Vorspannkraft einer Feder oder beider Federn 64 einstellen. Das Gehäuse 67 kann starr an der Gabel 33 befestigt sein. Mit Hilfe der stellbaren Gegenlager 65 kann die minimal notwendige Kraft eingestellt werden, die notwendig ist, um z.B. die mechanische Aktivierung einer Bremse über einen Bowdenzug zu ermöglichen. Alternativ oder zusätzlich kann die Bewegung des Mitnehmers 60 dazu dienen, einen Antriebsmotor oder eine elektrische Bremse zu steuern. Zur Übermittlung eines mechanischen oder elektronischen Betätigungssignals kann der Auflaufbremsaktor 6 einen entsprechenden Signalaufnehmer 66 umfassen, der ein Signal bereitstellt, dass zu einer Bewegung und/oder Stellung des Mitnehmers 60 korrespondiert. Dazu sind z.B. ein oder mehrere Magneten an dem Mitnehmer 60 fixiert, deren Stellung relativ zum dem Signalaufnehmer 66 mit Hallsensoren bestimmbar ist. Das entsprechende Signal kann zur Steuerung der Bremse und des Antriebes z.B. mittels Signalleitung oder mittels Funksignal an die Steuerung eines Elektromotors übertragen werden.

Die Lenkergabel 33 hat eine Drehachse, die sich vertikal erstreckt. Relativ zu der Drehachse der Lenkergabel 33 sind die Deichsel 31 und das Vorderrad 35 starr mit der Gabel 33 verbunden. Der Palettenhubanhänger 1 lässt sich über die Deichsel 31, die das Vorderrad 35 lenkt, steuern. Die Deichsel 31 ist dazu ausgelegt und eingerichtet, mit einem Fahrrad koppelbar zu sein. Wenn die Deichsel 31 von einem Fahrrad gelöst ist, kann sie mit den Händen ergriffen und als Zugstange verwendet werden. Die Deichsel 31 bei der in den Figuren 1 und 2 dargestellten Ausführung kann mit einem relativ tief liegende Koppelpunkt am Fahrrad verbunden werden, sodass die auftretenden Kräfte die Fahrdynamik nur minimal beeinflussen.

Der vorgestellte Palettenhubanhänger 1 ist dreirädrig ausgeführt. Alternativ könnte der Palettentraganhänger 1 vierrädrig ausgeführt sein, wobei anstelle des einzelne Vorderrads 35 zwei Vorderräder an dem Lenker 33 gehalten würden (nicht dargestellt). Um das Kipprisiko zu minimieren, können im vorderen Bereich des ersten Gestellabschnitts 4 rechts und links je ein schwenkbares Stützrad 37 vorgesehen sein. Das Stützrad 37 kann mittels Federn in die Stützposition gezogen werden. Bei einem Absenken des vorderen Gestellabschnitts 4 klappen die Stützräder 37 nach vorne und/oder oben weg. Während des Fahrbetriebs stehen die Stützräder 37 in der dargestellten heruntergeschwenkten Stellung bereit, um den Anhänger sicher abzustützen, ohne dass der Bediener diese vor Fahrbeginn aktiv in eine Fahrposition bringen muss.

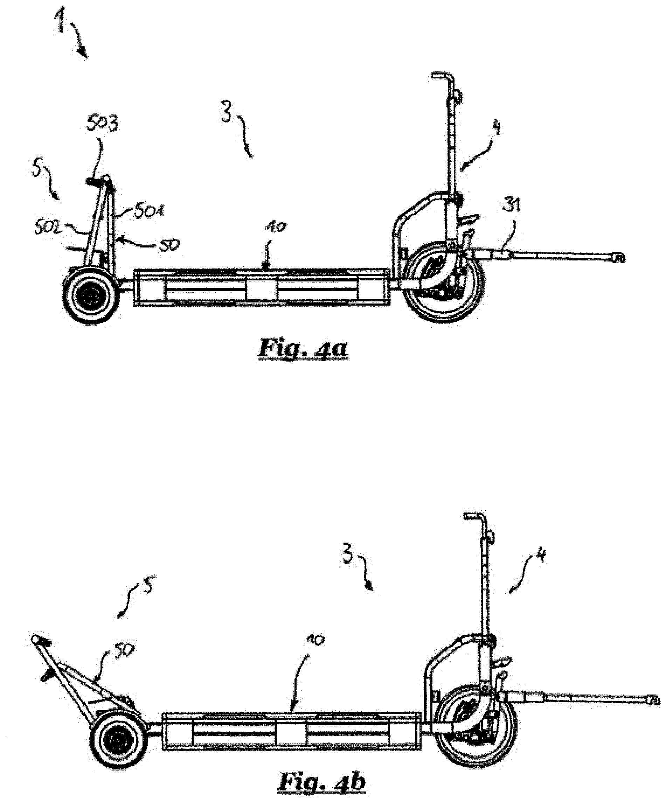

Die Gesamtbreite B der Palette (bei einer Europalette ca. 80 cm) soll vom Palettentraganhänger 1 aus Handhabungsgründen z.B. im innerstädtischen Verkehr nicht überschritten werden. Insbesondere soll die Spurbreite S der Hinterräder 55, 56 die Breite B der Palette 10 nicht überschreiten oder schmaler als die Breite B der Palette 10 sein. Alternativ oder zusätzlich kann entsprechend der in Figur 2 dargestellten Ausführung vorgesehen sein, dass die Rahmenteile des Fahrgestells, zum Beispiel die äußeren Rahmenrohre des ersten Gestellabschnitts 4, die Breite B nicht überschreiten oder schmaler als die Breite B sind. Die äußeren Rahmenrohre des ersten Gestellabschnitts können dazu ausgelegt sein, eine Abweisefunktion etwa zum Schutz vor einer Kollision des Transportgutes mit Hinternissen oder Personen zu realisieren. Bei einer nicht dargestellten alternativen Ausführung kann die Spurbreite S der Hinterräder 55, 56 größer sein als die Breite B der Palette, falls etwa eine besonders kippstabile Ausführung gewünscht ist. Zum Aufnehmen einer Palette 10 muss diese jedoch zuvor von den Längsstreben 41 unterfahren werden. Dazu ist das Fahrgestell 3 in einen ersten Gestellabschnitt 4 und einen zweiten Gestellabschnitt 5 unterteilt, die von einander getrennt werden können. Wenn die Palette 10 vom Fahrgestell 3 des Anhängers 1 unterfahren ist, kann die Palette mittels einer Hebevorrichtung des ersten und/oder zweiten Gestellabschnitts 4, 5 vom Boden angehoben werden. Dieser Vorgang wird unten unter Bezugnahme auf die Figuren 4a bis 4e beschrieben.

Bei der in Figur 1 und 2 dargestellten Ausführung ist am vorderen Gestellabschnitt 4 eine Handkurbel 34 vorgesehen, mit der eine Bodenfreiheit der Querträger 43 und der daran befestigten die Längsstreben 41 einstellbar ist. Die Handkurbel 34 betätigt eine im Inneren eines Rohrs 40 des vorderen Gestellabschnitts 4 untergebrachte Gewindespindel. Eine Absenkung wird veranlasst durch Drehen an der Stützradkurbel 34, wodurch die Gewindespindel, vorzugsweise ein Kugelgewindetrieb, eine mit der Gabel 33 verbundenen Mutter nach oben bewegt. Der untere Teil der Gabel 33 kann dann in das Rohr 40 hinein gleiten. Dadurch wird das Rohr 40 und der damit verbundene Querträger 43 abgesenkt.

Eine Fixierung der Kurbel 34 gegen selbständiges Lösen im Fahrbetrieb erfolgt durch einen Stift im Gehäuse der Kurbel 34. Dieser Stift wird beispielsweise durch eine Feder in eine Rastaufnahme im ersten Gestellabschnitt 4 gedrückt und verhindert so eine Drehbeweglichkeit der Kurbel 34. Die Fixierung kann überwunden werden, indem die Kurbel axial leicht nach unten gegen die Federkraft gedrückt wird, sodass der Stift aus der Arretieraufnahme freigegeben wird.

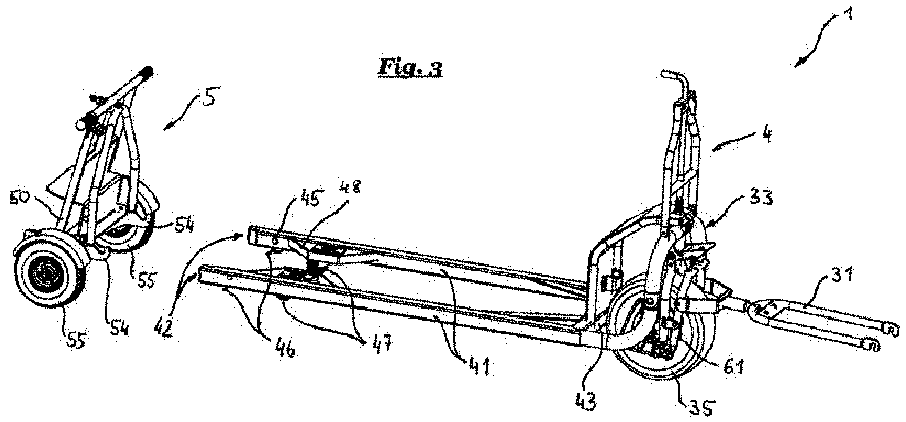

Figur 3 zeigt eine andere Ausführung eines Palettentraganhängers 1. Im Wesentlichen unterscheidet sich der Palettentraganhänger gemäß Figur 3 von dem zuvor Beschriebenen nur in der Ausgestaltung des Lenkers 33, insbesondere der Hebevorrichtung und der daran gehaltenen Deichsel 31. Die Deichsel 31 ist gabelförmig ausgeführt, um beidseitig eines Fahrrad-Hinterrad des angekoppelt zu werden. Die gabelförmige Deichsel 31 kann relativ zu dem Fahrgestell 3 um eine Längsachse drehbar sein. Als weiterer optionaler Unterschied ist in Figur 3 eine andere Ausgestaltung des zweiten bzw. hinteren Gestellabschnitts 5 dargestellt.

Figur 3 zeigt den Palettentraganhänger 1 aufgeteilt in einen vorderen Gestellabschnitt 4 und einen davon unabhängig fahrbaren hinteren Gestellabschnitt 5. Der vordere Gesellabschnitt 4 ist als Palettenhubwagen einsetzbar. Der hintere Gestellabschnitt 3 ist als Sackkarre verwendbar.

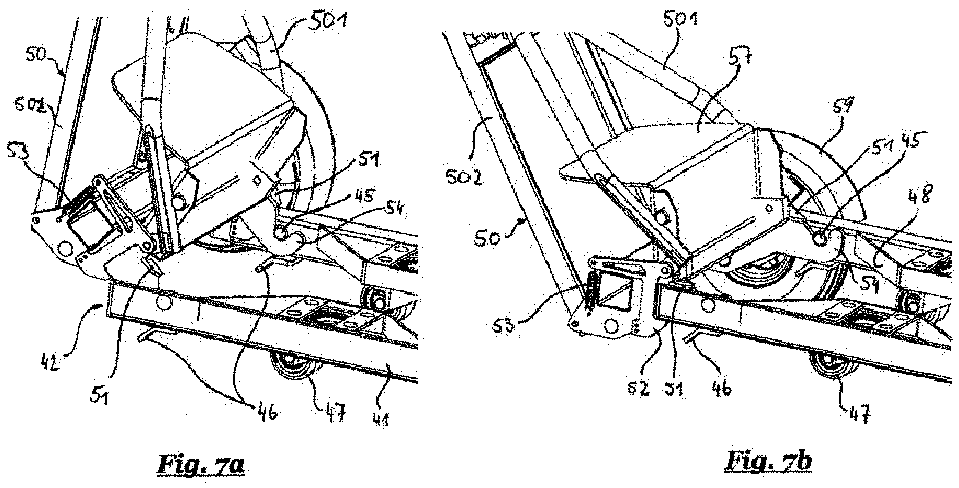

Am freien Ende 42 der Längsträger 41 ist jeweils quer zur Längsachse ein Aufnahmebolzen 45 angebracht. An der Vorderseite des hinteren Gestellabschnitts 5 sind Fanghaken 54 angeordnet, die zu den Aufnahmebolzen 45 korrespondieren. Mittels der Fanghaken 54 und der Aufnahmebolzen 45 kann der zweite Gestellabschnitt 5 mit dem ersten Gestellabschnitt 4 verbunden werden. Die Anbindung der Gestellabschnitte 4, 5 an einander mithilfe der Hebelkupplung wird unten bezugnehmend auf die Figuren 7a und 7b im Detail beschrieben.

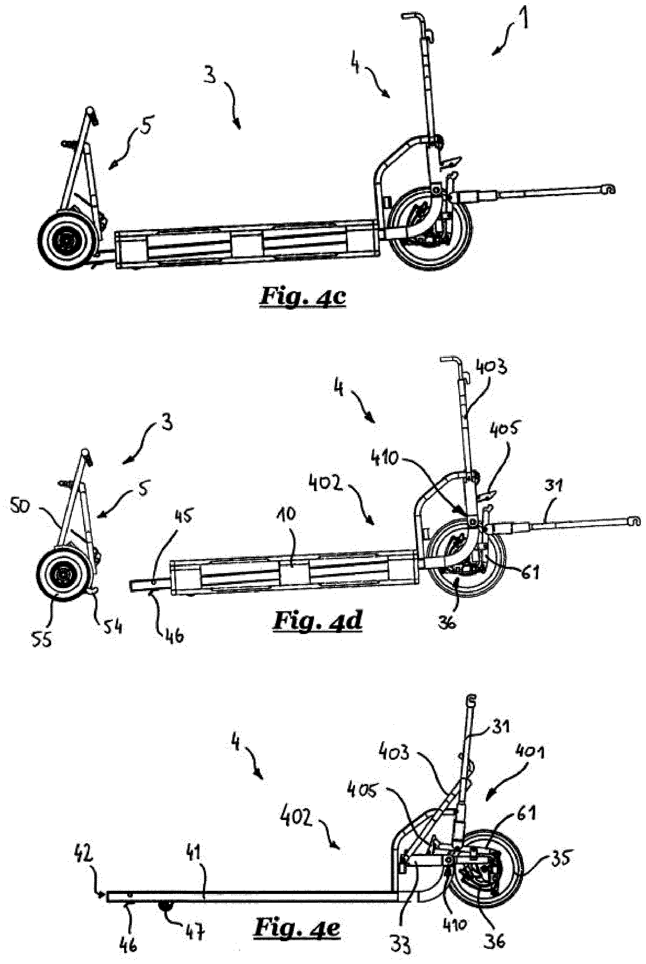

Nahe dem freien Ende 42 der Längsstreben 41, gegenüber dem Querträger 43, sind Hilfsrollen 47 vorgesehen. Der erste Gestellabschnitt kann mit Hilfe von an den Längsstreben 41 gelagerten Hilfsrollen 47, vorzugsweise Schwenkrollen, und dem Vorderrad 35 in die Zwischenräume einer Palette 10 einfahren (vgl. Figs. 4d & 4e). Dabei wirkt eine Rollenhalterung 48 mit sich in Palettenlängsrichtung verjüngender bzw. angeschrägten Form als Zentrierhilfe beim Einfahren zwischen die Palettenkufen. Im Fahrbetrieb kann die Rollenhalterung 48 seitliches Verrutschen der Palette 10 relativ zum Fahrgestell 3 verhindern.

Die Figuren 4a bis 4d zeigen verschiedene Zustände des Palettenhubwagens 1, den auch Figur 3 zeigt. Figur 4e zeigt nur dessen ersten Gestellabschnitt 5. Figur 4a zeigt den Palettentraganhänger 1 aus Figur 3 in einem Zustand, in dem die Gestellabschnitte 4, 5 mit einander verbunden sind und das so gebildete Fahrgestell 3 eine Europalette 10 trägt. Die Längsträger 41 des Fahrgestells 3 werden im Wesentlichen waagerecht zwischen den Hinterrädern 55, 56 und dem Vorderrad 35 getragen. Am in Fahrrichtung vorderen Ende des Fahrgestells 3 ist die Deichsel 31 angelenkt, mittels der der Palettentraganhänger 3 an ein Fahrrad gehängt werden kann.

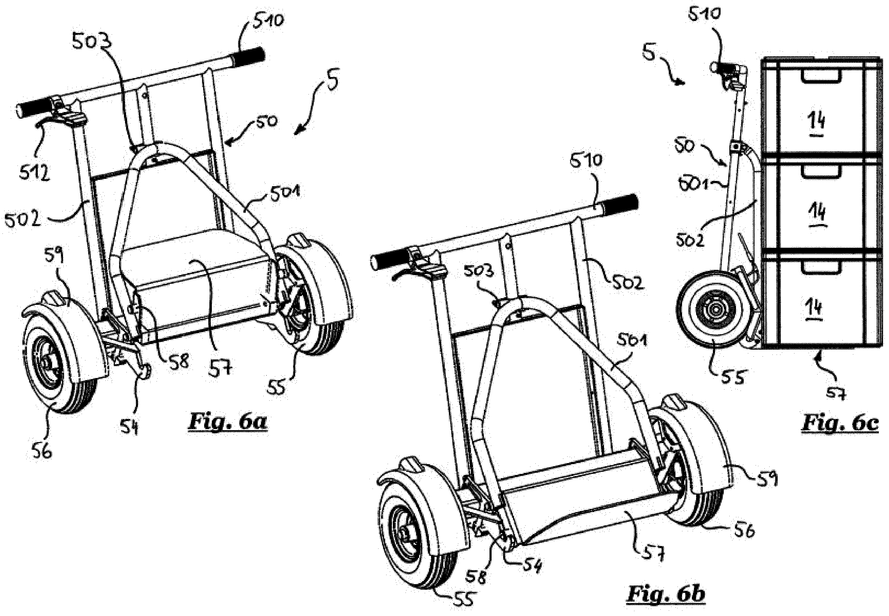

Figur 4b zeigt den Palettentraganhänger 1 in einem Zwischenzustand, in dem der zweite Gestellabschnitt 5 von dem ersten Gestellabschnitt 3 gelöst wird, jedoch noch nicht getrennt ist. Der Handgriff 510 ist relativ zu einer feststehenden Achse des zweiten Gestellabschnitts 5 drehbar. In dem abgebildeten Zwischenzustand ist der Griff 510 um ca. 45 Grad nach hinten geschwenkt und kann in dieser Stellung relativ zur Rahmenstruktur 50 arretiert werden. Die Gestellabschnitte 4, 5 sind in dieser Stellung noch mit einander verbunden. In einem nachfolgenden Schritt können die Gestellabschnitte 4, 5 von einander getrennt und entkoppelt werden. Dabei ist es hilfreich, wenn der Handgriff 510 zuvor, wie in Figur 4b abgebildet, nach hinten verschwenkt ist, um Freiraum für Transportgüter zu bieten, wenn der zweite Gestellabschnitt 5 mittels einer Schwenkbewegung auf den ersten Gestellabschnitt 4 zu von diesem entkoppelt und abgesetzt wird. Zwischen den Figuren 4b und 4c erfolgt ein Hebevorgang bzw. Absenkvorgang des zweiten Gestellabschnitts 5. Der Hebevorgang erfolgt durch eine Drehung des zweiten Gestellabschnitts 5 relativ zum ersten Gestellabschnitt 4 um die Rollachse der Hinterräder 55, 56. Im Zuge des Hebevorgangs wird der zweite Gestellabschnitt 5 vom ersten Gestellabschnitt 4 getrennt. Figur 4d zeigt den zweiten Gestellabschnitt 5 entfernt vom ersten Gestellabschnitt 4. Das Lösen und Trennen des ersten vom zweiten Gestellabschnitt 5 erfolgt bei der hier dargestellten Ausführung mittels einer Hebelkupplung, deren Aufbau und Funktionsweise nachfolgend im Detail anhand der Figuren 7a und 7b erläutert wird. Wenn der zweite Gestellabschnitt 5 abgetrennt ist, kann er bei der hier abgebildeten Ausführung entsprechend den Figuren 6a bis 6c wie eine Sackkarre verwendet werden. Das Zusammenfügen und Befestigen des ersten Gestellabschnitts 4 und des zweiten Gestellabschnitts erfolgt entsprechend durch Durchführung der entsprechenden Handhabungsschritte in umgekehrter Reihenfolge.

Figur 4e zeigt den ersten Gestellabschnitt 4 vereinzelt. Zwischen den Figuren 4d und 4e erfolgt ein Hebevorgang bzw. Absenkvorgang des ersten Gestellabschnitts 4. Der Hebevorgang erfolgt durch eine Drehung eines Teils des ersten Gestellabschnitts 4 um die Rollachse des Vorderrads 35. Der erste Gestellabschnitt 4 ist bei der Ausführung gemäß der Figur 3 und 4a bis 4e unterteilbar in einen Fahrwerksteil 401 und einen Ladeflächenteil 402. Die Teile 401, 402 des ersten Gestellabschnitts 4 bilden eine Hebevorrichtung. Der Ladeflächenteil 401 umfasst die Querstrebe 43 mit gegebenenfalls daran befestigter Ladewand 44 und die Längsstreben 41.

Der Fahrwerksteil 401 umfasst das Vorderrad 35, den Lenker 33 und die Deichsel 31. Der Fahrwerksteil 401 und der Ladeflächenteil 402 sind mit einem Gelenk 410 und einem Arretierbolzen 403 an einander gekoppelt.

In dem angehobenen Zustand des ersten Gestellabschnitts 4 gemäß beispielsweise Figur 4d sind die Teile 401, 402 des ersten Gestellabschnitts 4 durch Sicherung in Form eines Arretierbolzens 403 starr mit einander verbunden. Zum Absenken des Ladeflächenteils 402 muss der Arretierbolzen 403 vom Vorderrad 35 weg gegen eine Federkraft nach oben gezogen werden, um den Lenker 33 vom Ladeflächenteil 402 zu lösen. Der Lenker 33 wird mit dem Arretierbügel 405 starr an dem bügelförmigen Hebel 61 befestigt, mit dem die Deichsel 31 verbunden ist. Der Arretierbolzen 403 kann die Deichsel 31 starr mit dem Lenker 33 verbinden. Die Deichsel 31 kann dann als Hebel verwendet werden, um die Teile 401, 402 des ersten Gestellabschnitts relativ zu einander um ca. 90° zu verschwenken, um den Ladeflächenteil 402 abzusenken (Fig. 4e) bzw. anzuheben (Fig. 4d, Fig. 3). Da die Vorderradachse in Fahrtrichtung hinter dem Lenker 33 angeordnet ist, muss eine von der Ladung abhängige Kraft aufgewendet werden, um den Schwenkvorgang ausführen und den Ladeflächenteil 402 absenken zu können. Ein ungewolltes plötzliche Absenken nach Lösen des Arretierbolzens 403 wird so vermieden. In dem abgesenkten Zustand des ersten Gestellabschnitts 4 gemäß Figur 4e sind die Teile 401, 402 des ersten Gestellabschnitts 4 durch ihr Eigengewicht gehalten.

In dem abgesenkten Zustand gemäß Figur 4e ist das Vorderrad 35 relativ zum Ladeflächenteil 402 nach oben verlagert, sodass die Längsträger 41 mithilfe der Hilfsrollen 47 und dem Vorderrad 35 in einer niedrigen, im Wesentlichen waagrechten Stellung angeordnet sind, damit der erste Gestellabschnitt 4 unter eine Palette 10 geschoben werden kann.

Die Hebevorrichtung des Palettentraganhängers 1 gemäß der in den Figuren 1 und 2 dargestellten Ausführung kommt ohne Arretierbolzen und ohne Arretierbügel aus. Die Gabel 33 braucht nicht relativ zu dem übrigen ersten Gestellabschnitt 4 verschwenkt werden. Stattdessen kann mithilfe der Kurbel 34 der gesamte von dem Vorderrad 35 getragen Gestellabschnitt 4 von einem abgesenkten Zustand in einem angehobenen Zustand gebracht werden und umgekehrt.

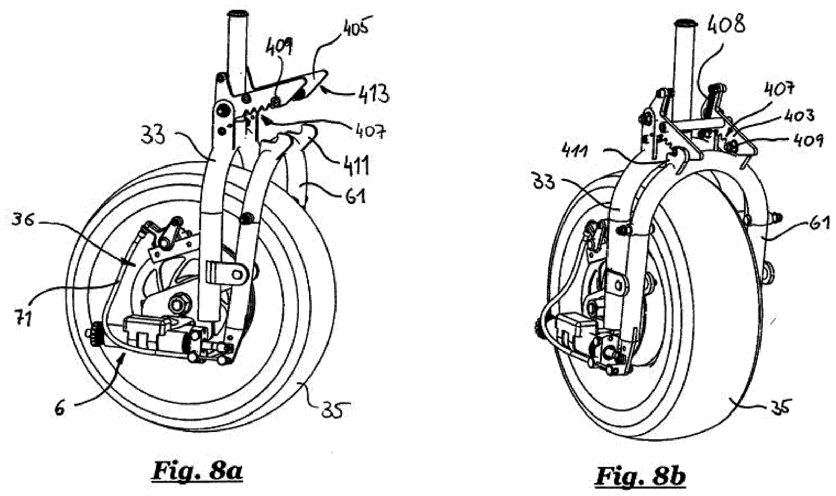

Zum Einleiten der Absetzbewegung selbst wird der Arretierbolzen 403 soweit geschwenkt, bis er auf die Deichsel 31 trifft. Mithilfe der auf den Arretierbolzen 403 wirkenden Federkraft kann eine starre Rastverbindung, zwischen Deichsel 31 und Arretierbolzen 403 geschlossen werden, beispielsweise indem der Arretierbolzen 403 nach vollendeter Schwenkbewegung losgelassen wird. Die Sicherung mithilfe des Arretierbügels 405 ist in den Figuren 8a und 8b im Detail dargestellt. Der Arretierbügel 405 kann an einer Unterseite mehrere gestuften Aufnahmen aufweisen, die eine Rastkontur 407 bilden, und umfasst Haltenasen 409. Die Haltenasen 409 werden mit einem Anschlag 411 am Hebel 61 verbunden (Fig. 8b). An dem Hebel 61 ist die Deichsel 31 angebunden. Durch die Verbindung von Deichsel 31, Hebel 61, Arretierbügel 405, Lenker 33 und Arretierbolzen 403 wird das Fahrwerksteil 401 zu einer starren Einheit zusammengefügt. Das Fahrwerksteil 402 kann sodann relativ zu dem Ladeflächenteil 401 verschwenkt werden um das Gelenk 410, dass Fahrwerksteil 401 und Ladeflächenteil 402 mit einander verbindet.

Der Arretierbügel 405 ist schwenkbar an der Gabel 33 gelagert. Der Arretierbügel 405 kann sich in einer inaktiven Stellung (Figur 8a) befinden, in der der Arretierbügel 405 den Hebel 61 freigibt. Der Arretierbügel kann sich alternativ in einer aktiven Arretierstellung (Figur 8b) befinden, in deren der Arretierbügel 450 einem Kontakteingriff mit dem Hebel 61 befindet und den Hebel 61 ortsfest gegenüber der Gabel 33 hält. In der Arretierstellung wird der Hebel 61 und der damit verbundene Auflaufbremsaktor 6 in einer passiven Freilaufstellung fixiert. An dem Arretierbügel 405 ist eine Arretierbügel-Feder 408 befestigt, die den Arretierbügel 405 bistabil in der inaktiven Stellung oder in der aktiven Arretierstellung hält. Solange der Hebel 61 durch den Arretierbügel 405 starr an der Gabel 33 gehalten ist, kann der Palettenhubanhänger 1 oder dessen vorderer Gestellabschnitt 4 mithilfe der Deichsel 31 gelenkt und gezogen oder geschoben werden, ohne dass der Auflaufbremsaktor 6 aktiviert wird. Die Arretierbügel-Feder 408 stützt sich einerseits an dem Arretierbügel 405 und andererseits an der Gabel 33 ab.

Der Arretierbügel 405 hat an seiner Vorderkante eine Schräge 411. Der Arretierbügel 405 und die Deichsel 31 sind derart auf einander abgestimmt, dass der Arretierbügel 405 aus seiner aktiven Arretierstellung in die inaktive Stellung gedrängt wird, wenn die Deichsel 31 gegen den Arretierbügel 405 geschwenkt wird. Die Deichsel 31 kann gegen die Schräge 411 gefahren werden und beim Gleiten entlang der Schräge 411 den Arretierbügel 405 in die inaktive Stellung drängen.

Zunächst läßt sich die Deichsel 31 solange nach oben um das Deichselgelenklager schwenken, bis die Deichsel 31 die Schräge 411 berührt. Bei weiterem Schwenken der Deichsel 31 wird der Arretierbügel 405 nach oben aus dem Bügelanschlag 411 geschoben und der Arretierbügel gleitet gegen die Federkraft der Bügelfeder 408 entlang der Rastkontur 407 nach oben und anschließend solange weiter, bis die Rastkontur 407 in eine komplementäre Verzahnung an der Deichsel 31 eingreift. Dabei wird der Hebel 61 ab dem Schwenkwinkel der Deichsel 31, an dem der Arretierbügel 405 in Kontakt mit der Deichsel 31 steht, mitgenommen und die Bremse 36 durch die entsprechende Drehbewegung des Hebels 61 aktiviert. Die Verzahnung ist dabei so ausgeführt, dass das Nachuntenschwenken der Deichsel 31 nur dann möglich ist, wen vorher der Arretierbügel 405 gegen die Kraft der Bügelfeder 408 wieder in die inaktive Fahrstellung gebracht worden ist, beispielsweise per Hand. Durch diese Ausführung wird keine zusätzliches Haltebremse wie z.B. ein Bremshebel benötigt. Beim Parken des Anhängers 1 steht die Deichsel 31 in gebremsten Zustand, insbesondere im Wesentlichen senkrecht, nach oben und minimiert dadurch den Platzbedarf.

Die zweiten Laufradachse bzw. Hinterradachse kann als Ganzes vom vorderen Gestellabschnitt 5 des Palettenhubanhängers 1 abgekoppelt werden, um mit einem sehr leichtem Hubrahmen 5 unter eine Palette fahren zu können. Die Hinterräder 55, 56 an der zweiten Laufradachse sind für den Straßenverkehr und Schwertransport auf unebenem Boden geeignet. Zu diesem Zweck können Sie entsprechend groß und robust ausgeführt sein.

Das Anheben einer Last mithilfe des zweiten Gestellabschnitts 5 kann besonders leicht durch eine einzige Schwenkbewegung mit anschließender automatischer Verriegelung erfolgen, wie anhand der Figuren 4c und 4b zu erkennen ist. Die dazu eingesetzte Hebelkupplung ist im Detail in den Figuren 7a und 7b dargestellt. Die Hebelkupplung eignet sich für die verschiedenen in den Figuren dargestellten Ausführungen eines Palettentraganhängers 1. Die Hinterräder 55, 56 sind an dem zweiten Gestellabschnitt 5 drehbar gehalten und brauchen zum Lösen und entfernen des zweiten Gestellabschnitts 5 vom ersten Gestellabschnitt 4 nicht gelöst werden.

Dank der Hebelkupplung können die beiden Längsholme 41 des vorderen Gestellabschnitts 4 mit dem hinteren Gestellabschnitt 5 in einem einzigen Bewegungsablauf (Figuren 4d bis 4b) aufgenommen, angehoben und in angehobenen Zustand verriegelt werden. Die Haltung des zweiten Gestellabschnitts 5 in der Detaildarstellung in Figur 7a korrespondiert zu Figur 4c. Die Haltung des zweiten Gestellabschnitts 5 in der Detaildarstellung in Figur 7b korrespondiert zu Figur 4b.

Der zweite Gestellabschnitt 5 weist ein Paar zu den Aufnahmebolzen 45 korrespondierende Fanghaken 54 auf. Die Fanghaken 54 sind mit einer Rahmenstruktur 50 des zweiten Gestellabschnitts 5 verbunden, an dem auch die Hinterräder 55, 56 drehbar gelagert sind. Zum Ergreifen des ersten Gestellabschnitts 4 wird zunächst der Fanghaken 54 an der Vorderseite des zweiten Gestellabschnitts 5 zu dem korrespondierenden Aufnahmebolzen 45 an der Innenseite der Längsstrebe 41 geführt. Dazu wird der zweite Gestellabschnitt 5 nach vorne auf den ersten Gestellabschnitt 4 zu gekippt, wie in den Figuren 4c und 4d abgebildet, bis die Haken 54 nahe oder unmittelbar am Boden entlanggeführt werden können. Der Fanghaken 54 wird unter den Aufnahmebolzen 45 geführt, sodass der Bolzen 45 in eine konkave Einbuchtung an der Oberseite des Fanghakens 54 gelangen kann, wie in Fig. 7a gezeigt. Am Boden liegende Führungsbleche 46 an den Längsstreben 41 erleichtern das Einführen der Haltebolzen 45 in die Fanghaken 54. An beiden Streben 41 ist je ein Aufnahmebolzen 45 vorgesehen.

Nach dem Ergreifen der Bolzen 45 mit den Haken 54 wird der zweite Gestellabschnitt 5 aufwärts geschwenkt, wobei die Fanghaken 54 die Bolzen 45 mitnehmen. Dadurch werden die Längsstreben 41 und eine darauf gegebenenfalls angeordnete Palette 41 angehoben. Die Schwenkbewegung des Gestellabschnitts 5 wird begrenzt durch Anschläge 51 am zweiten Gestellabschnitt 5 seitlich der Fanghaken 54, wenn diese in einen Kontakteingriff mit der Oberseite der Längsstreben 41 gelangen. Die Hebelkupplung umfasst eine Sicherung, die hier als federvorgespannte Rastnase 52 realisiert sind. Die Rastnase 52 ist formkomplementär zu dem vorderen Ende 42 der Längsstrebe 41 geformt, sodass in einem Haltezustand (Fig. 7b) eine formschlüssige Verbindung zwischen erstem und zweitem Gestellabschnitt 4, 5 gebildet wird. Die Sicherungsfeder 53 drängt die Rastnase 52 in den Haltezustand. Im Haltezustand verriegelt die Rastnase 52 die Verbindung der Gestellabschnitte 4, 5. Die Rastnase 52 ist schwenkbar am zweiten Gestellabschnitt 5 gelagert. Die Sicherungsfeder 53 verbindet die Rastnase 52 mit einer Rahmenstruktur 50 des zweiten Gestellabschnitts 5.

Die Rahmenstruktur 50 setzt sich aus einem Griffbügel 502 und einem Verstärkungsbügel 501 zusammen. Der Fanghaken 54 verbindet den Griffbügel 502 mit dem Verstärkungsbügel 501. In einem Fahrzustand und für einen Hebezustand (etwa 45° nach hinten geschwenkt) ist der Verstärkungsbügel 501 mit einer Bügelarretierung 503 starr an dem Verstärkungsbügel 501 befestigt (Fig. 4a).

Zum Absenken des Palettenhubwagens 1 auf der Seite der Hinterradachse wird als erstes die Rahmenstruktur 50 ca. 45° nach hinten geschwenkt. Dazu wird die Bügelarretierung 403 des Verstärkungsbügels 501 gelöst und anschließend der Griffbügel 502 nach hinten geschwenkt, beispielsweise um etwa ca. 45° ausgehend von einer Normalstellung der Rahmenstruktur 50, in eine Stellung entsprechend Figur 4b oder 7b. Dadurch wird vorteilhafterweise einer Kollision des Griffs 510 mit Gütern auf der Palette 10 entgegengewirkt, wenn die Rahmenstruktur 50 zum Absenken der Palette 10 nach vorn geschwenkt wird, beispielsweise um etwa 45° ausgehend von der Normalstellung (Figs. 4c & 7a).

In den Figuren 1, 7a und 7b ist eine Ausführung dargestellt, die ein versehentliches Entriegeln der Rastnase 52 und damit plötzliches Absenken der Ladung verhindert, solange der Griffbügel 510 nicht in der hinteren Position ist. Erst dann kann durch nochmaliges Ziehen an dem Betätigungshebel die Klinke gelöst werden. Erreicht wird dies durch die Verzweigung eines Dritten Bowdenzuges vom Griffhebel 512 auf mehrere Stränge. Wenn der Griffbügel 502 in Fahrtstellung nach oben steht, wird bei Betätigung des Griffhebels 512 mittels eines ersten Strangs des dritten Bowdenzugs nur die Bügelarretierung 503 gelöst, sodass der Griff 510 mit dem daran befestigten Griffbügel 502 nach hinten verschwenkbar ist. Der zweite Strang des dritten Bowdenzugs gibt elastisch gegen eine Feder nach und kann dadurch keine ausreichende Kraft zum Lösen der Rastnase 52 bereitstellen. In der nach hinten verschwenkten Stellung des Griffbügels 502 wird der zweite Strang des Dritten Bowdenzugs fixiert. Dadurch kann dann bei erneutem Betätigen des Griffhebels 512 die Rastnase 52 entgegen der Kraft der Feder 53 gelöst werden, um die Hebelkupplung des ersten und zweiten Gestellabschnitts 4, 5 zu entriegeln, sodass die Gestellabschnitte 4, 5 relativ zu einander beweglich sind.

Nachdem die Rastnase 52 oder Klinke gegen die Kraft der Feder 53 aus dem formschlüssigen Eingriff mit der Kontur des vorderen Endes 42 des Längsträgers 41 entfernt wurde, zieht das Gewicht des ersten Gestellabschnitts 4 und der gegebenenfalls davon getragenen Ladung den Fanghaken 54 nach unten in die Stellung gemäß Fig. 7a.

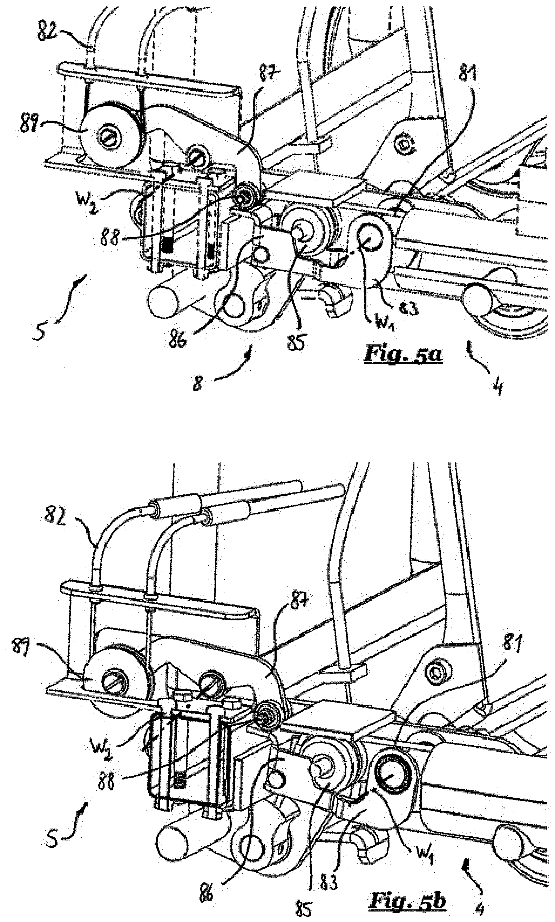

Die Hinterräder 55, 56 können, sofern sie beispielsweise mit Radnabenmotoren ausgestattet sind, zum elektrischen Bremsen verwendet werden. Die Radnabenmotoren können beim elektrischen Bremsen rekuperierend als Generator ausgestaltet sein (nicht im Detail dargestellt). Alternativ oder zusätzlich können die Hinterräder 55, 56 mit einer mechanischen Bremse, beispielsweise einer Trommel- oder Scheibenbremse ausgeführt sein. Die Bremse der Hinterräder 55, 56 ist zum Übertragen einer Bremskraftwirkung mit dem Auflaufbremsaktor 6 verbunden. Die Verbindung der Hinterradbremse mit dem Auflaufbremsaktor kann mit einem ersten und einem zweiten Bowdenzug realisiert sein, die lösbar mit einander verbunden sind. Eine Bremskupplung 8 zum lösbaren Verbinden eines ersten Bowdenzugs 81 mit einem zweiten Bowdenzug 82 ist im Detail in den Figuren 5a und 5b dargestellt.

Wie in Figur 9 dargestellt ist, erstreckt sich der erste Bowdenzug 81 vom Auflaufbremsaktor 6 zum hinteren Ende 42 eines der beiden Längsstege 41. Der erste Bowdenzug 81 ist abschnittsweise innerhalb des Rahmenrohrs geführt, dass den Längssteg 41 bildet. Am Längssteg 41 ist ein erster Wipphebel 83 schwenkbar gelagert. Der erste Bowdenzug 81 ist am rückseitigen Ende 86 des Wipphebel 83 gegenüber dessen Schwenkachse W1 befestigt. Zwischen der Schwenkachse W1 und der Befestigung des ersten Bowdenzugs ist eine erste Umlenkrolle 85 angeordnet, die eine Zugbewegung des ersten Bowdenzugs 81 in Längsrichtung des ersten Gestellabschnitts 4 umwandelt in eine Aufwärtsbewegung des hinteren Hebelendes 86. Wenn der Auflaufbremsaktor 6 eine Bremskraftwirkung bereitstellt, in dem er den ersten Bowdenzug 81 mit einer Zugkraft beaufschlagt, wird eine Aufwärtsbewegung am ersten Wipphebel 83 bereitgestellt (Fig. 5b). Während der erste Bowdenzug 81 entspannt ist, verbleibt das hintere Hebelende 86 in einer abgesenkten Ruhestellung (Fig. 5a).

Der erste Wipphebel 83 steht mit einem zweiten Wipphebel 87 kämmend in Eingriff. Der zweite Wipphebel 83 ist schwenkbar an der Rahmenstruktur 50 des zweiten Gestellabschnitts 5 gelagert. Das vordere Ende 88 des zweiten Wipphebels 87 steht mit dem hinteren Ende 86 des ersten Wipphebels 83 in Eingriff. Am hinteren Ende des zweiten Wipphebels 87 ist eine Losrolle 89 drehbeweglich gelagert, an der der zweite Bowdenzug 82 entlanggeführt ist. Der zweite Wipphebel 87 ist relativ zu der Rahmenstruktur 50 um eine zweite Wipphebelachse W2 schwenkbar, die zwischen dem vorderen Ende 88 und der Losrolle 89 angeordnet ist. Wenn der zweite Wipphebel 87 vorne 88 angehoben wird, wird die Losrolle 89 abwärts geschwenkt und dadurch der zweite Bowdenzug 82 mit einer Bremskraftwirkung beaufschlagt (Fig. 5b). Der zweite Bowdenzug 82 kann die Bremskraftwirkung Bremsen an beiden Hinterrädern 55, 56 bereitstellen. Durch die Verwendung der Losrolle 89 oder Ausgleichsrolle kann eine gleichmäßige Verteilung der Bremskraftwirkung an beide Hinterräder 55, 56 bereitgestellt werden. Solange das vordere Hebelende 88 in einer abgesenkten Ruhestellung. Wenn die Gestellabschnitte 4, 5 gekoppelt sind, ruht das vordere Hebelende 88 des zweiten Wipphebels 87 auf dem hinteren Hebelende 86 des ersten Wipphebels 81 ruht, ruht die Losrolle entspannt am zweiten Bowdenzug 82 (Fig 5a).

Die Bremskupplung 8 erlaubt eine reibungsarme und spielfreie mechanische Übertragung der Bremskraftwirkung vom Auflaufbremsaktor 6 auf die Hinterräder 55, 56. Mithilfe der Bremskupplung ist es auf einfache Weise möglich, beim oben Beschriebenen Verbinden der Gestellabschnitte 4, 5 an einander sogleich eine Anbindung der Hinterradbremse an den Auflaufbremsaktor 6 umzusetzen. Wenn das hintere Ende 42 des vorderen Gestellabschnitts 4 mit dem hinteren Gestellabschnitt 5 starr verbunden wird, wird sogleich auch die Bremskupplung 8 wird geschlossen und so eine Verbindung des ersten 81 und zweiten Bowdenzugs 82 realisiert. Das Kraftschlüssige Verbinden des ersten und des zweiten Bowdenzugs 81, 82 mit einander bedarf keines separaten Koppelvorgangs, sondern erfolgt automatisch beim Verbinden der Gestellabschnitte 4, 5 mit einander. Anstatt der Übertragung des Bremssignales mittels eines ersten Bowdenzugs 81 und eines zweiten Bowdenzugs 82 kann insbesondere anstelle des zweiten Bowdenzugs 82 eine hydraulische Bremsanlage vorgesehen sein. Bei einer derartigen Ausgestaltung kann die Bremskupplung 8 einen Kolben eines Hydraulikzylinders betätigen, von dem ausgehend ein Hydraulikdruck auf zwei Hydraulikbremszylinder der beiden Hinterräder wirken kann (nicht abgebildet).

Wenn, wie in Figur 3 oder 4d dargestellt, der hintere Gestellabschnitt 5 abgetrennt ist, kann der zweite Gestellabschnitt als Sackkarren verwendet werden. Die Ausgestaltung des zweiten Gestellabschnitts 5 als Sackkarren ist in den Figuren 6a bis 6c illustriert. Am zweiten Gestellabschnitt 5 ist ein Tragblech 52 angeordnet. Das Tragblech 57 kann schwenkbar sein zwischen einer herabgeklappten Tragstellung (Figs. 6b & 6c) und einer hochgeklappten Bordwandstellung (Fig 6a, Fig. 9). In der Tragstellung können Transportgüter 14 auf dem Tragblech 57 abgestellt werden und sich gegebenenfalls am Verstärkungsbügel 501 abstützen. In der Tragstellung kann sich das Tragblech 57 in einer vorbestimmten Stellung an der Rahmenstruktur 50 abstützen. Vorzugsweise ist das Tragblech 57 derart auf die Hinterräder 55, 56 abgestimmt, dass sich die Unterseite Tragblechs 57 im Wesentlichen tangential zu dem den Außenumfang der Hinterräder 55, 56 erstreckt, sodass die Sackkarre stabil steht. Beispielsweise kann das Tragbleich mit einem seitlich hervorragenden Rastbolzen 58 ausgestattet sein, der von dem Fanghaken 54 gehalten wird. In der Bordwandstellung kann sich das Tragblech 57 in einer definierten Stellung am Verstärkungsbügel 501 abstützen.

Der zweite Gestellabschnitt 5 kann Schutzbleche 59 an den Hinterrädern 55, 56 aufweisen. Die Schutzbleche 59 können auf einander zu weisende Innenseiten haben, die in der Tragstellung eine gedachte Ebene des Verstärkungsbügels 501, an der die Ladung 14 beim Kippen ansteht, tangieren. Dies hat den Vorteil, dass lange, quer auf der Sackkarre 5 liegende Transportgüter 14 durch die beiden Schutzbleche 59 abgestützt werden und so deutlich stabiler transportiert werden können.

Bei der Verwendung des Palettenhubanhängers 1 z.B. bei last-mile-Lieferungen mit Paketen auf einer Europalette 10 ist es von Vorteil, die Ware temporär durch eine entsprechende Umhausung 9 vor Nässe, Diebstahl oder Beschädigungen zu schützen. Vorteilhaft dabei ist die Wiederverwendbarkeit und das kleine Packmaß einer robusten Umhausung 9. Figur 11 zeigt eine Umhausung 9, die ähnlich einer Klapp-Kiste einfach mittels geeigneter Scharniere 91 zerlegbar ist, ohne dass dabei einzelne Flachteile 92 der Umhausung 9 abgetrennt werden brauchen. Die fünfseitig umschlossene Umhausung 9 kann nach öffnen einer Klappe 93 mittels eingelassener Rollen 94 leicht über eine am Boden stehende Palette 10 mit Ladung gerollt werden. Nach anschließendem Abschließen der Klappen 93 und einer Verriegelung der Umhausung 9 gegen die Europalette 10 sind die Transportgüter geschützt transportierbar.

## Patentansprüche

1. Palettentraganhänger (1) für ein einspuriges Fahrzeug, wie ein Fahrrad, zum Transportieren einer Europalette (10) mit länglichen Kufen und wenigstens einer die Kufen verbindenden Tragplatte, umfassend zwei Hinterräder (55, 56), wenigstens ein Vorderrad (35) und ein von dem Vorderrad (35) und den Hinterrädern (55, 56) getragenes Fahrgestell (3) mit zwei Längsstreben (41), die zum Tragen der Europalette unter der Tragplatte und zwischen den Kufen anordenbar sind, wobei das Fahrgestell (3) einen ersten Gestellabschnitt (4), an den das wenigstens eine Vorderrad (35) gelagert ist, und einen zweiten Gestellabschnitt (5), an dem die Hinterräder (55, 56) gelagert sind, umfasst, insbesondere daraus besteht, **dadurch gekennzeichnet, dass** der erste und der zweite Gestellabschnitt (4, 5) von einander insbesondere werkzeugfrei lösbar sind und
dass die Hinterräder (55, 56) eine Spurbreite (S) definieren, die nicht größer ist, als die Breite (B) der Europalette (10).

2. Palettentraganhänger (1) nach Anspruch 1, **dadurch gekennzeichnet, dass** die Längsstreben (41) im Wesentlichen waagerecht zwischen den Hinterrädern (55, 56) und dem Vorderrad (35) getragen sind und/oder dass die Längsstreben (41) eine Oberseite aufweisen, die während des Fahrbetriebs nicht höher angeordnet ist als die Höhe der Hinterräder (55, 56), wobei insbesondere Oberseite der Längsstreben (41) zum Tragen der Europalette in etwa auf Höhe der Drehachse des Vorder- und/oder Hinterrads (35, 55, 56) angeordnet ist, und/oder dass die Längsstreben (41) Teil des ersten Gestellabschnitts (4) sind.

3. Palettentraganhänger (1) nach Anspruch 1 oder 2, **dadurch gekennzeichnet, dass** die Hinterräder (55, 56) wenigstens eine Bremse aufweisen.

4. Palettentraganhänger (1) nach Anspruch 3, **dadurch gekennzeichnet, dass** das Fahrgestell (3) eine, insbesondere werkzeugfrei, lösbare Bremskupplung (8) aufweist, um eine Bremskraftwirkung von dem ersten Gestellabschnitt auf den zweiten Gestellabschnitt zu übertragen.

5. Palettentraganhänger (1) nach Anspruch 4, **dadurch gekennzeichnet, dass** die Bremskupplung (8) einen am ersten Gestellabschnitt (4) befestigten ersten Wipphebel (83) und einen am zweiten Gestellabschnitt (5) befestigten zweiten Wipphebel (87), umfasst, die derart aufeinander abgestimmt sind, dass der erste Wipphebel (83) und der zweite Wipphebel (87) durch eine insbesondere translatorische Relativbewegung des zweiten Gestellabschnitts (5) relativ zu dem ersten Gestellabschnitt (4) in einen, insbesondere formkomplementären, Kontakteingriff zur Übertragung der Bremswirkung bringbar sind.

6. Palettentraganhänger (1) nach Anspruch 5, **dadurch gekennzeichnet, dass** die Bremse ein zweites Kraftübertragungsmittel umfasst und der zweite Wipphebel (87) zum Betätigen der Bremse mit dem zweiten Kraftübertragungsmittel verbunden ist, wobei insbesondere der zweite Wipphebel (87) ein Ausgleichsmittel umfasst, der bzw. das dazu ausgelegt und eingerichtet ist, einer Bremse an dem rechten Hinterrad (55) und einer Bremse an dem linken Hinterrad (56) eine gleichmäßige Bremswirkung bereitzustellen.

7. Palettentraganhänger (1) nach einem der vorstehenden Ansprüche, **dadurch gekennzeichnet, dass** der erste Gestellabschnitt (4) einen ersten Bowdenzug (81) zur Übertragung einer Bremskraftwirkung an die Bremse umfasst, wobei der erste Bowdenzug (81) zumindest abschnittsweise innerhalb einer Längsstrebe (41) angeordnet ist.

8. Palettentraganhänger (1) nach einem der Ansprüche 2 bis 7, **dadurch gekennzeichnet, dass** der erste Gestellabschnitt (41) einen Auflaufbremsaktor (6) umfasst, der dazu ausgelegt und eingerichtet ist, der wenigstens einen Bremse eine Bremskraftwirkung bereitzustellen, wenn sich die Geschwindigkeit des den Palettentraganhänger (1) ziehenden Fahrzeugs reduziert.

9. Palettentraganhänger (1) nach Anspruch 8, wobei der Auflaufbremsaktor (6) wenigstens einen zwischen dem Fahrgestell (3) und einer Deichsel (31) zum Anbinden des Fahrgestells (3) an das Fahrzeug angeordneten Hebel (61) umfasst, wobei der Hebel (61) schwenkbar an dem Fahrgestell (3) gelagert ist und dazu ausgelegt und eingerichtet ist, eine auf das Fahrgestell (3) zu gerichtete Bewegung der Deichsel (31) in eine Bremskraftwirkung umzuwandeln.

10. Palettentraganhänger (1) nach einem der vorstehenden Ansprüche, **dadurch gekennzeichnet, dass** der zweite Gestellabschnitt (5) wenigstens einen oberhalb der Hinterräder (55, 56) angeordneten Handgriff (510) und wenigstens ein im Bereich der Hinterräder (55, 56) angeordnetes, quer zu den Hinterrädern (55, 56) ausrichtbares, klappbares Tragblech (57) aufweist.

11. Palettentraganhänger (1) nach einem der vorstehenden Ansprüche, **dadurch gekennzeichnet, dass** der zweite Gestellabschnitt (5) eine Hebelkupplung zum Anbinden an den ersten Gestellabschnitt (5) umfasst, die wenigstens einen Haken (54) zum Erfassen und Anheben der Längsstreben (41) umfasst, wobei die Hebelkupplung einen gegenüber dem Haken (54) angeordneten Anschlag zum ortsfesten Positionieren der Längsstreben (41) umfasst und/oder eine Sicherung zum Verhindern einer Trennung des ersten vom zweiten Gestellabschnitt.

12. Palettentraganhänger (1) nach einem der Ansprüche 1 bis 10, **dadurch gekennzeichnet, dass** die Längsstreben (41) fest mit dem ersten Gestellabschnitt (4) verbunden sind, wobei jede Längsstrebe (41) wenigstens eine nahe einem freien Ende (42) der Längsstrebe (41) in Längsrichtung gegenüber dem Vorderrad (35) angeordnete Hilfsrolle (47) aufweist.

13. Palettentraganhänger (1) nach Anspruch 12, **dadurch gekennzeichnet, dass** der erste Gestellabschnitt (4) eine Hebevorrichtung, wie eine Kniehebelmechanik oder eine Kurbel, umfasst, um die Längsstreben (41) in eine abgesenkten Stellung zum Unterfahren der Europalette (10) und/oder in eine angehobenen Stellung zum Tragen der Europalette (10) zu verbringen.

14. Palettentraganhänger (1) nach Anspruch 12 oder 13, **dadurch gekennzeichnet, dass** am ersten Gestellabschnitt (4) wenigstens ein schwenkbares Stützrad (37) angeordnet ist, das zwischen einer niedrigen und einer hohen Stellung beweglich an dem ersten Gestellabschnitt (4) gelagert ist, wobei insbesondere das Stützrad (37) in der abgesenkten Stellung der Hebevorrichtung in der hohen Stellung und in der angehobenen Stellung der Hebevorrichtung in der niedrigen Stellung angeordnet ist.

15. Palettentraganhänger (1) nach einem der vorstehenden Ansprüche, **dadurch gekennzeichnet, dass** am zweiten Gestellabschnitt (5) wenigstens ein Elektromotor angeordnet ist, der dazu ausgelegt und eingerichtet ist, wenigstens eines der Hinterräder (55, 56) anzutreiben.

## Claims

1. Pallet carrier trailer (1) for a single-track vehicle, such as a bicycle, for transporting a pallet (10) with elongate runners and at least one support plate connecting the runners, comprising two rear wheels (55, 56), at least one front wheel (35) and a chassis (3) supported by the front wheel (35) and the rear wheels (55, 56) with two longitudinal struts (41), which can be arranged under the support plate and between the runners for supporting the pallet, wherein the chassis (3) comprises, in particular consists of, a first frame section (4), on which the at least one front wheel (35) is mounted, and a second frame section (5), on which the rear wheels (55, 56) are mounted, **characterised in that** the first and the second frame section (4, 5) can be released from one another, in particular without tools, and
**in that** the rear wheels (55, 56) define a track width (S) which is not greater than the width (B) of the pallet (10).

2. Pallet carrier trailer (1) according to claim 1, **characterised in that** the longitudinal struts (41) are supported substantially horizontally between the rear wheels (55, 56) and the front wheel (35) and/or **in that** the longitudinal struts (41) have an upper side which is arranged no higher than the height of the rear wheels (55, 56) during driving operation, wherein in particular the upper side of the longitudinal struts (41) is arranged approximately at the height of the axis of rotation of the front and/or rear wheel (35, 55, 56) for supporting the pallet, and/or **in that** the longitudinal struts (41) are part of the first frame section (4).

3. Pallet carrier trailer (1) according to claim 1 or 2, **characterised in that** the rear wheels (55, 56) have at least one brake.

4. Pallet carrier trailer (1) according to claim 3, **characterised in that** the chassis (3) has a brake coupling (8) for transmitting a braking force action from the first frame section to the second frame section which is releasable, in particular without tools.

5. Pallet carrier trailer (1) according to claim 4, **characterised in that** the brake coupling (8) comprises a first rocker lever (83) fastened to the first frame section (4) and a second rocker lever (87) fastened to the second frame section (5), which are matched to one another in such a way that the first rocker lever (83) and the second rocker lever (87) can be brought into a contact engagement, in particular complementary in shape, for transmitting the braking action by an in particular translational relative movement of the second frame section (5) relative to the first frame section (4).

6. Pallet carrier trailer (1) according to claim 5, **characterised in that** the brake comprises a second force transmission means and the second rocker lever (87) is connected to the second force transmission means for actuating the brake, wherein in particular the second rocker lever (87) comprises a compensating means which is configured and adapted to provide a uniform braking action to a brake on the right rear wheel (55) and a brake on the left rear wheel (56).

7. Pallet carrier trailer (1) according to one of the preceding claims, **characterised in that** the first frame section (4) comprises a first Bowden cable (81) for transmitting a braking force action to the brake, wherein the first Bowden cable (81) is arranged at least in sections within a longitudinal strut (41).

8. Pallet carrier trailer (1) according to one of claims 2 to 7, **characterised in that** the first frame section (41) comprises an overrun brake actuator (6) which is configured and adapted to provide a braking force action to the at least one brake when the speed of the vehicle pulling the pallet carrier trailer (1) is reduced.

9. Pallet carrier trailer (1) according to claim 8, wherein the overrun brake actuator (6) comprises at least one lever (61) arranged between the chassis (3) and a drawbar (31) for connecting the chassis (3) to the vehicle, wherein the lever (61) is pivotably mounted on the chassis (3) and is configured and adapted to convert a movement of the drawbar (31) directed towards the chassis (3) into a braking force action.

10. Pallet carrier trailer (1) according to one of the preceding claims, **characterised in that** the second frame section (5) has at least one handle (510) arranged above the rear wheels (55, 56) and at least one foldable carrying plate (57) arranged in the region of the rear wheels (55, 56) and alignable transversely to the rear wheels (55, 56).

11. Pallet carrier trailer (1) according to one of the preceding claims, **characterised in that** the second frame section (5) comprises a lever coupling for connection to the first frame section (5), which comprises at least one hook (54) for gripping and lifting the longitudinal struts (41), wherein the lever coupling comprises a stop arranged opposite the hook (54) for stationary positioning of the longitudinal struts (41) and/or a securing means for preventing separation of the first from the second frame section.

12. Pallet carrier trailer (1) according to one of claims 1 to 10, **characterised in that** the longitudinal struts (41) are fixedly connected to the first frame section (4), wherein each longitudinal strut (41) has at least one auxiliary roller (47) arranged close to a free end (42) of the longitudinal strut (41) in the longitudinal direction opposite the front wheel (35).

13. Pallet carrier trailer (1) according to claim 12, **characterised in that** the first frame section (4) comprises a lifting device, such as a toggle lever mechanism or a crank, in order to bring the longitudinal struts (41) into a lowered position for travelling under the pallet (10) and/or into a raised position for supporting the pallet (10).

14. Pallet carrier trailer (1) according to claim 12 or 13, **characterised in that** at least one pivotable support wheel (37) is arranged on the first frame section (4) and is mounted on the first frame section (4) so as to be movable between a low position and a high position, wherein in particular the support wheel (37) is arranged in the low position in the lowered position of the lifting device and in the raised position of the lifting device.

15. Pallet carrier trailer (1) according to one of the preceding claims, **characterised in that** at least one electric motor is arranged on the second frame section (5) and is configured and adapted to drive at least one of the rear wheels (55, 56).

## Revendications

1. Remorque porte-palettes (1) pour un véhicule à une seule voie, tel qu'une bicyclette, pour le transport d'une palette (10) avec des patins allongés et au moins une plaque de support reliant les patins, comprenant deux roues arrière (55, 56), au moins une roue avant (35) et un châssis (3) porté par la roue avant (35) et les roues arrière (55, 56) avec deux montants longitudinaux (41) qui peuvent être disposés sous la plaque de support et entre les patins pour porter la palette, le châssis (3) comprenant, en particulier étant constitué d'une première section de châssis (4) sur laquelle est montée l'au moins une roue avant (35) et d'une deuxième section de châssis (5) sur laquelle sont montées les roues arrière (55, 56), **caractérisée en ce que** la première et la deuxième section de châssis (4, 5) peuvent être détachées l'une de l'autre en particulier sans outil et
**en ce que** les roues arrière (55, 56) définissent une largeur de voie (S) qui n'est pas supérieure à la largeur (B) de la palette (10).

2. Remorque porte-palettes (1) selon la revendication 1, **caractérisée en ce que** les montants longitudinaux (41) sont portés sensiblement horizontalement entre les roues arrière (55, 56) et la roue avant (35) et/ou **en ce que** les montants longitudinaux (41) présentent une face supérieure qui n'est pas disposée plus haut que la hauteur des roues arrière (55, 56) pendant le mode de conduite, la face supérieure des montants longitudinaux (41) étant en particulier disposée approximativement à la hauteur de l'axe de rotation de la roue avant et/ou de la roue arrière (35, 55, 56) pour porter la palette, et/ou **en ce que** les montants longitudinaux (41) font partie de la première section de châssis (4).

3. Remorque porte-palettes (1) selon la revendication 1 ou 2, **caractérisée en ce que** les roues arrière (55, 56) présentent au moins un frein.

4. Remorque porte-palettes (1) selon la revendication 3, **caractérisée en ce que** le châssis (3) présente un accouplement de frein (8) détachable, en particulier sans outil, pour transmettre un effet de force de freinage de la première section de châssis à la deuxième section de châssis.

5. Remorque porte-palettes (1) selon la revendication 4, **caractérisée en ce que** l'accouplement de frein (8) comprend un premier levier basculant (83) fixé à la première section de châssis (4) et un deuxième levier basculant (87) fixé à la deuxième section de châssis (5), qui sont adaptés l'un à l'autre de telle sorte que le premier levier basculant (83) et le deuxième levier basculant (87) peuvent être amenés en prise de contact, en particulier de forme complémentaire, par un mouvement relatif, en particulier de translation, de la deuxième section de châssis (5) par rapport à la première section de châssis (4) pour la transmission de l'effet de freinage.

6. Remorque porte-palettes (1) selon la revendication 5, **caractérisée en ce que** le frein comprend un deuxième moyen de transmission de force et le deuxième levier basculant (87) est relié au deuxième moyen de transmission de force pour l'actionnement du frein, le deuxième levier basculant (87) comprenant en particulier un moyen de compensation qui est conçu et agencé pour fournir un effet de freinage uniforme à un frein sur la roue arrière droite (55) et à un frein sur la roue arrière gauche (56).

7. Remorque porte-palettes (1) selon l'une quelconque des revendications précédentes, **caractérisée en ce que** la première section de châssis (4) comprend un premier câble Bowden (81) pour la transmission d'un effet de force de freinage au frein, le premier câble Bowden (81) étant disposé au moins en partie à l'intérieur d'une entretoise longitudinale (41).

8. Remorque porte-palettes (1) selon l'une quelconque des revendications 2 à 7, **caractérisée en ce que** la première section de châssis (41) comprend un actionneur de frein à inertie (6) qui est conçu et agencé pour fournir un effet de force de freinage à l'au moins un frein lorsque la vitesse du véhicule tirant la remorque porte-palettes (1) se réduit.

9. Remorque porte-palettes (1) selon la revendication 8, dans laquelle l'actionneur de frein à inertie (6) comprend au moins un levier (61) disposé entre le châssis (3) et un timon (31) pour relier le châssis (3) au véhicule, le levier (61) étant supporté de manière pivotante sur le châssis (3) et étant conçu et agencé pour convertir un mouvement du timon (31) dirigé vers le châssis (3) en un effet de force de freinage.

10. Remorque porte-palettes (1) selon l'une quelconque des revendications précédentes, **caractérisée en ce que** la deuxième section de châssis (5) présente au moins une poignée (510) disposée au-dessus des roues arrière (55, 56) et au moins une tôle de support rabattable (57) disposée dans la région des roues arrière (55, 56), pouvant être orientée transversalement aux roues arrière (55, 56).

11. Remorque porte-palettes (1) selon l'une quelconque des revendications précédentes, **caractérisée en ce que** la deuxième section de châssis (5) comprend un accouplement de levier pour la liaison à la première section de châssis (5), qui comprend au moins un crochet (54) pour saisir et soulever les entretoises longitudinales (41), l'accouplement de levier comprenant une butée disposée par rapport au crochet (54) pour le positionnement fixe des entretoises longitudinales (41) et/ou une sécurité pour empêcher une séparation de la première de la deuxième section de châssis.

12. Remorque porte-palettes (1) selon l'une quelconque des revendications 1 à 10, **caractérisée en ce que** les entretoises longitudinales (41) sont connectées fixement à la première section de châssis (4), chaque entretoise longitudinale (41) présentant au moins un rouleau auxiliaire (47) disposé à proximité d'une extrémité libre (42) de l'entretoise longitudinale (41) dans la direction longitudinale par rapport à la roue avant (35).

13. Remorque porte-palettes (1) selon la revendication 12, **caractérisée en ce que** la première section de châssis (4) comprend un dispositif de levage, tel qu'un mécanisme à genouillère ou une manivelle, pour amener les entretoises longitudinales (41) dans une position abaissée pour descendre la palette (10) et/ou dans une position relevée pour porter la palette (10).

14. Remorque porte-palettes (1) selon la revendication 12 ou 13, **caractérisée en ce qu'**au moins une roue d'appui pivotante (37) est disposée sur la première section de châssis (4), laquelle est supportée de manière mobile entre une position basse et une position haute sur la première section de châssis (4), la roue d'appui (37) étant en particulier disposée dans la position haute dans la position abaissée du dispositif de levage et dans la position basse dans la position relevée du dispositif de levage.

15. Remorque porte-palettes (1) selon l'une quelconque des revendications précédentes, **caractérisée en ce qu'**au moins un moteur électrique est disposé sur la deuxième section de châssis (5), lequel est conçu et agencé pour entraîner au moins l'une des roues arrière (55, 56).
